# EUROPÄISCHE PATENTSCHRIFT

(11) **EP 3 987 188 B1**
(45) Veröffentlichungstag und Bekanntmachung des Hinweises auf die Patenterteilung: **14.01.2026**
(21) Anmeldenummer: 20735502.5
(22) Anmeldetag: 19.06.2020
(51) Int. Cl.: F16B 2/00, F16B 35/06, F16B 5/02

(54) **BEFESTIGUNGSANORDNUNG UND HERSTELLUNGSVERFAHREN**
FASTENING ASSEMBLY AND METHOD FOR PRODUCTION
ENSEMBLE DE FIXATION ET PROCÉDÉ DE FABRICATION

(30) Priorität: 19.06.2019 DE 202019002648 U; 11.09.2019 DE 102019006509
(43) Veröffentlichungstag der Anmeldung: 27.04.2022
(73) Patentinhaber: Fürstenberg, Malte, 20539 Hamburg (DE)
(72) Erfinder: Fürstenberg, Malte, 20539 Hamburg (DE)
(74) Vertreter: Tappe, Udo
(86) Internationale Anmeldenummer: PCT/EP2020/067227
(87) Internationale Veröffentlichungsnummer: WO 2020/254648

(56) Entgegenhaltungen:
- DE-A1- 102006 031 161
- DE-A1- 102015 016 174
- FR-A1- 3 038 007
- JP-A- H08 291 814
- US-A1- 2009 304 443
- US-A1- 2014 356 094
- US-A1- 2016 016 055

## Beschreibung

### Gebiet der Erfindung

Die Erfindung betrifft eine Befestigungsanordnung mit einer Schraubenmutter oder einem Schraubenkopf mit einem Körper, der eine Grundfläche, eine Deckfläche und eine Mantelfläche umfasst, sowie ein Herstellungsverfahren der Schraubenmutter oder des Schraubenkopfes.

### Hintergrund der Erfindung

Aus dem Stand der Technik sind Schraubenmuttern bekannt, die eine Bohrung mit Innengewinde und eine prismatische Außenkontur aufweisen. Durch die prismatische Außenkontur ist es möglich, ein Werkzeug so z.B. Schraubenschlüssel, an die Schraubenmutter anzusetzen, um ein Drehmoment auf die Schraubenmutter zum Befestigen auszuüben. Dabei ist es erforderlich, dass die Schraubenmutter jederzeit zugänglich ist, so dass auch ein Werkzeug angesetzt werden kann.

Die Druckschrift US 2014/0356094 A1 zeigt eine Schraubenmutter und einen Schraubenkopf der eingangs genannten Art, im Rahmen einer Baugruppe mit einem ersten und einem zweiten Teil aus Verbundmaterial, die durch mindestens ein Befestigungssystem zusammen gehalten werden, das einen Bolzen mit einem flachen Kopf, von dem sich ein Gewindeabschnitt erstreckt, und eine Mutter mit einem flachen Kopf, von dem sich ein Schaft mit einem zum Zusammenwirken mit dem Gewindeabschnitt des Bolzens geeigneten Gewinde erstreckt, umfaßt. Der Kopf des Bolzens liegt an einer im ersten Teil ausgebildeten Senkung an. Der Kopf der Mutter stützt sich auf eine im zweiten Teil ausgebildete Senkung. Das Befestigungssystem ist geeignet, bei einer axialen Ausdehnung des Befestigungssystems eine Neigung jedes Kopfes in Richtung der Senkung, in der er untergebracht ist, zu bewirken.

Die CN201851466U beschreibt eine Schraubenmutter mit einer Bohrung, die ein Innengewinde aufweist. Die Mutter hat eine kegelförmige Außenkontur und kann somit in einem Bauteil voll versenkt werden. Dabei umfasst die Mutter aber Ausnehmungen auf der Oberseite der Schraubenmutter, um eine Zugänglichkeit eines Werkzeugs zu gewährleisten, um die Mutter befestigen zu können.

### Beschreibung der Erfindung

Die Aufgabe, die der Erfindung zugrunde liegt, ist es, eine Schraubenmutter vorzuschlagen, die für eine Befestigung eines Bauteils werkzeuglos befestigt werden kann.

Die Aufgabe wird gelöst durch die Merkmale der unabhängigen Patentansprüche. Vorteilhafte Ausgestaltungen der Erfindung sind in den Unteransprüchen angegeben.

Bei der Erfindung wird gemäß einem ersten Aspekt eine Schraubenmutter oder einen Schraubenkopf zum Befestigen eines Bauteils benutzt.

Schraubenmutter wird im Folgenden synonym auch für Schraubenkopf verwendet, da die Vorteile der Erfindung auch bei einem Schraubenkopf erzielt werden können. Die Schraubenmutter oder der Schraubenkopf umfasst einen Körper, der durch eine Grundfläche, eine Deckfläche sowie eine dazwischen verlaufende Mantelfläche gebildet ist. Ein Flächeninhalt der Grundfläche ist größer als ein Flächeninhalt der Deckfläche. Dabei hat die Mantelfläche zumindest bereichsweise eine Oberflächenstruktur, die geeignet ist, eine vorgegebene Reibung in Zusammenwirkung mit einer vorgegebenen Fläche des Bauteils zu erreichen, wobei diese Reibung größer ist als eine Reibung bei glatter Oberfläche der Mantelfläche. Die Grundfläche weist eine im Wesentlichen glatte Oberfläche auf. Vorzugsweise geht bei einer Schraubenmutter die Bohrung von der Deckfläche aus und verläuft zumindest teilweise zwischen Deckfläche und Grundfläche und umfasst ein Innengewinde vorgegebener Größe.

Eine derartige Schraubenmutter oder ein derartig ausgebildeter Schraubenkopf hat den Vorteil, dass, in einer korrespondierend ausgebildeten Senkung, so z.B. Senkbohrung, des Bauteils angeordnet, eine bündige Oberfläche mit dem Bauteil gebildet wird. Dabei bildet vorzugsweise die Grundfläche der Schraubenmutter oder des Schraubenkopfes einen Teil dieser bündigen Oberfläche und die Deckfläche ist der Senkung zugewandt. Des Weiteren resultiert aufgrund der Oberflächenstruktur der Mantelfläche der Schraubenmutter oder des Schraubenkopfes eine Reibung zwischen dieser und einer Fläche der Senkung. Diese Reibung bewirkt während einer Befestigung mittels einer passenden Schraube ein Reibungsdrehmoment, welches dem Anzugsdrehmoment, welches die Schraube auf die Schraubenmutter auswirkt, derart entgegenwirkt, dass sich die Schraubenmutter nicht "mitdreht" und umgekehrt. Dies ermöglicht dann eine Befestigung der Schrauben, ohne dass ein Werkzeug an der Schraubenmutter und an dem Schraubenkopf angesetzt werden muss.

Der Körper weist eine zwischen der Grundfläche und Deckfläche verlaufende Mantelfläche auf. Die Mantelfläche weist in einem Längsschnitt betrachtet einen geradlinigen oder gebogenen Verlauf zwischen der Grundfläche und Deckfläche auf.

Die Ebenen der Grundfläche und Deckfläche verlaufen vorzugsweise parallel.

Der Körper der Schraubenmutter oder des Schraubenkopfes kann beispielweise aus Metall bestehen, so z.B. Edelstahl, Messing, Aluminium oder einem anderen Metall oder einer Metalllegierung. Grundsätzlich kann der Körper aber auch aus jedem anderen für die jeweilige Befestigung des Bauteils erforderlichen oder passenden Material hergestellt sein.

Die Bohrung geht immer von der Deckfläche aus. Dabei kann die Bohrung komplett durch den Körper oder alternativ als Sacklochbohrung nur teilweise durch diesen verlaufen. Vorzugsweise verläuft die Bohrung ausgehend von dem Mittelpunkt der Deckfläche in Normalenrichtung der Deckfläche in Richtung der Grundfläche. Das Innengewinde ist beispielsweise als metrisches ISO Gewinde ausgeführt. Es kann aber auch einer anderen Norm entsprechen oder frei gestaltet sein.

Die Grundfläche weist eine im Wesentlichen glatte Oberfläche auf. "Im Wesentlichen" bedeutet in diesem Zusammenhang, dass bei einer durchgehenden Bohrung durch den Körper, lediglich die Bohrungsöffnung in der Grundfläche als die glatte Oberfläche "störende" Vertiefung vorhanden ist, ansonsten aber die Grundfläche eine glatte Oberfläche aufweist. Verläuft die Bohrung ausgehend von der Deckfläche nur zum Teil durch den Körper, weist die Grundfläche eine durchgehend glatte Oberfläche auf.

Eine glatte Oberfläche bedeutet in diesem Zusammenhang, dass die Oberfläche keine sichtbaren Erhebungen oder Vertiefungen aufweist.

In einer vorteilhaften Ausgestaltung der Schraubenmutter oder des Schraubenkopfes des ersten Aspekts weist der Körper eine kegelstumpfförmige Kontur auf. In dieser Ausgestaltung entsprechen die Grundfläche der Schraubenmutter oder des Schraubenkopfes der Grundfläche des kegelstumpfförmigen Körpers und die Deckfläche der Schraubenmutter oder des Schraubenkopfes der Deckfläche des kegelstumpfförmigen Körpers.

In einer weiteren vorteilhaften Ausgestaltung der Schraubenmutter oder des Schraubenkopfes des ersten Aspekts ist die Oberflächenstruktur derart ausgebildet, dass die Mantelfläche zumindest teilweise eine Verzahnung aufweist, die aus der Oberfläche der Mantelfläche herausragt. Dabei kann ein Mantelprofil der Verzahnung spitz, scharf oder anderweitig reibwerterhöhend ausgebildet sein. Auch verläuft die Verzahnung auf der Mantelfläche vorzugsweise derart, dass der Verlauf des Mantelprofils zumindest teilweise zwischen Deckfläche und Grundfläche ausgerichtet ist und somit einer möglichen Drehung, resultierend aus dem Anzugsdrehmoment der zu befestigenden Schraube, entgegenwirken kann.

Grundsätzlich ist die Oberflächenstruktur der Mantelfläche so ausgeführt, dass die Mantelfläche Erhebungen aufweist, so z.B. Zacken, Zinken, Keile, Rampen, Nuten, Rillen, Schlitze oder ähnliches, die aus der Oberfläche der Mantelfläche herausragen. Derart resultiert aus dieser Oberflächenstruktur der Mantelfläche in Zusammenwirkung mit der zugeordneten Senkungsfläche des Bauteils ein hoher Reibwert.

In einer weiteren vorteilhaften Ausgestaltung der Schraubenmutter oder des Schraubenkopfes des ersten Aspekts ist die Oberflächenstruktur zumindest im Bereich der Mantelfläche angeordnet, die zu der Grundfläche benachbart ist. Dies hat dann einen Vorteil, wenn die Schraubenmutter oder der Schraubenkopf zum Befestigen in eine Senkung eingeführt wird, deren Flächen einen Winkel aufspannen, der kleiner ist, als der Winkel zwischen der Mantelfläche. In diesem Fall berührt nämlich vorzugsweise der mit der Oberflächenstruktur ausgeführte Bereich der Mantelfläche zuerst die Senkungsfläche, wenn die Schraubenmutter oder der Schraubenkopf in der Senkung zum Befestigen angeordnet wird. Auch wenn die restliche Mantelfläche nicht mit der Oberflächenstruktur ausgestaltet wäre, könnte auch in einem noch nicht befestigten Zustand bereits eine hohe Reibung zwischen Senkung und der Mantelfläche erreicht werden, so dass während des Befestigens die Verwendung eines Werkzeugs zum Gegenhalten der Schraubenmutter oder des Schraubenkopfes nicht erforderlich ist.

In einer weiteren vorteilhaften Ausgestaltung der Schraubenmutter oder des Schraubenkopfes des ersten Aspekts ist die Oberflächenstruktur der Mantelfläche als Beschichtung ausgebildet. Dies bietet eine besonders einfache Möglichkeit, die Mantelfläche mit einer reibungserhöhenden Oberflächenstruktur zu versehen.

Bei der Erfindung wird gemäß einem zweiten Aspekt eine Schraubenmutter oder einen Schraubenkopf zum Befestigen eines Bauteils benutzt, mit einem pyramidenstumpfförmigen Körper, der durch eine Grundfläche, eine Deckfläche sowie eine dazwischen verlaufende Mantelfläche gebildet ist. Die Mantelfläche weist zumindest drei Kanten auf. Ein Flächeninhalt der Grundfläche ist größer als ein Flächeninhalt der Deckfläche. Der Körper umfasst bei einer Schraubenmutter ferner eine Bohrung, die ausgehend von der Deckfläche zumindest teilweise zwischen Deckfläche und Grundfläche verläuft und ein Innengewinde vorgegebener Größe aufweist.

Dabei kann die Senkung analog zu der kegelstumpfförmigen Schraubenmutter oder dem Schraubenkopf ausgebildet sein. Im Vergleich zu der Schraubenmutter oder dem Schraubenkopf gemäß dem ersten Aspekt ist bei einem pyramidenstumpfförmigen Körper eine haftungserhöhende Oberflächenstruktur der Mantelfläche nicht unbedingt erforderlich. Vielmehr ermöglicht die Form als Pyramidenstumpf aufgrund der zumindest drei Kanten bereits eine derartige Zusammenwirkung zwischen Schraubenmutter oder Schraubenkopf und der Senkung, dass ein Werkzeug während des Befestigens nicht erforderlich ist.

Die jeweilige Kante verläuft vorzugsweise ausgehend von der Grundfläche in Richtung der Deckfläche.

Das Innengewinde kann beispielsweise als metrisches ISO Gewinde ausgeführt sein, alternativ aber auch einer anderen Norm entsprechen oder frei gestaltet sein.

In einer weiteren vorteilhaften Ausgestaltung der Schraubenmutter oder des Schraubenkopfes gemäß dem ersten oder zweiten Aspekt schließen in einem Längsschnitt die Verlängerungen der Mantelflächen einen Winkel ein, der größer gleich 60° ist. Das hat den Vorteil, dass die Fläche der Mantelfläche, die mit der Senkung im befestigten Zustand zusammenwirkt, möglichst groß ist. Daraus resultiert eine große Fläche, die im befestigten Zustand auf das Bauteil wirkt. Dabei werden Kräfte über eine größere Fläche der Mantelfläche auf das Bauteil verteilt und damit die Belastung auf das Bauteil pro Flächeneinheit im befestigten oder belasteten Zustand reduziert.

Ferner ergibt sich ein weiterer Vorteil dann, wenn die Schraubenmutter zum Befestigen in eine Senkung eingeführt wird, deren Winkel einen Wert aufweist, der kleiner ist, als der Winkel der Mantelfläche. In diesem Fall berührt nämlich ein von der Mittelachse des Körpers relativ weit beabstandeter Bereich der Mantelfläche zuerst die Senkung. Ein aus diesem Abstand resultierender Hebel in Zusammenwirkung mit einer aus der Reibung resultierenden Reibungskraft bewirkt ein Reibungsdrehmoment, welches wirkungsvoll dem Anzugsdrehmoment durch eine in der Schraubenmutter zu befestigende Schraube entgegenwirkt. Dadurch kann ein Mitdrehen der Schraubenmutter während der Befestigung verhindert werden, ohne das ein Werkzeug zum Gegenkontern der Schraubenmutter erforderlich ist oder umgekehrt.

Bei einer weiteren vorteilhaften Ausgestaltung des ersten oder zweiten Aspekts weist der Körper der Schraubenmutter oder des Schraubenkopfes mehrere Schlitze auf, die jeweils zumindest in die Mantelfläche und die Grundfläche hineinragen. Dabei sind die Schlitze derart voneinander beabstandet, dass eine Federwirkung auf das Bauteil während einer Befestigung der Schraubenmutter oder des Schraubenkopfes im Bereich der Mantelfläche resultiert, der zu der Grundfläche benachbart ist. Auch diese Ausgestaltung hat dann einen Vorteil, wenn die Schraubenmutter oder der Schraubenkopf zum Befestigen in eine Senkung eingeführt wird, deren Winkel kleiner ist, als der Winkel der Mantelfläche. In diesem Fall berührt nämlich vorzugsweise der mit der Federwirkung behaftete Bereich der Mantelfläche zuerst die Senkungsfläche des Bauteils. Dadurch kann auch eine aus der Federwirkung resultierende elastische Verformung dieses Bereiches der Schraubenmutter oder des Schraubenkopfes eine reibungserhöhende Wirkung haben. In Kombination mit der Oberflächenstruktur führt die Federwirkung bereits in einem noch nicht befestigten Zustand zu einer Reibung zwischen Senkung und der Mantelfläche, so dass kein Werkzeug während der Befestigung erforderlich ist. Auch kann in einem befestigten Zustand eine Klemmwirkung mittels der Schlitze zwischen der Schraubenmutter oder dem Schraubenkopf und der Senkung im Bereich der Schlitze erreicht werden. Dies kann wirkungsvoll ein ungewolltes Lösen, so z.B. ein "Losrütteln", der Schraubenmutter oder des Schraubenkopfes während einer Belastung des Bauteils verhindern.

In einer weiteren vorteilhaften Ausgestaltung des ersten oder zweiten Aspekts weist der Körper in dem Bereich der Deckfläche und/oder in dem zu der Deckfläche benachbarten Bereich der Mantelfläche zumindest teilweise einen Kleber oder ein Klebeelement auf. Dies hat den Vorteil, dass die Schraubenmutter oder der Schraubenkopf in eine entsprechende Senkung eingesetzt werden kann und in dieser mittels des Klebers und/oder mittels des Klebeelements verbleibt, ohne dass eine Schraube zumindest teilweise eingeschraubt werden muss. Dies ermöglicht die Befestigung des Bauteils nur über eine Seite, ohne dass auf der anderen Seite die Schraubenmutter oder der Schraubenkopf festgehalten werden muss. Somit ist auch eine einseitige Befestigung möglich.

Bei der Erfindung ist gemäß einem dritten Aspekt die Senkung in einer Oberfläche eines zu befestigenden Bauteils angeordnet. Die Form der Senkung korrespondiert zu der Form des Körpers der Schraubenmutter oder des Schraubenkopfes. Die Schraubenmutter oder der Schraubenkopf ist in einem befestigten Zustand derart in der Senkung angeordnet, dass die Grundfläche der Schraubenmutter oder des Schraubenkopfes bündig ist mit der Oberfläche des Bauteils. In dieser Anordnung ragen somit keine Elemente der Mutter oder des Kopfes aus der Oberfläche des zu befestigenden Bauteils heraus.

Die glatte Oberfläche der Senkungsfläche bedeutet in diesem Zusammenhang, dass diese keine sichtbaren Erhebungen oder Vertiefungen aufweist. Die Senkungsfläche der Senkung kann dabei eine glatte Oberfläche aufweisen. Aber grundsätzlich wäre auch eine aufgeraute Oberfläche möglich, um eine Reibung zwischen Senkungsfläche und Mantelfläche zu erhöhen.

Bei der erfindungsgemäßen Befestigungsanordnung korrespondiert die Form der Senkung derart zu der Form der Schraubenmutter oder des Schraubenkopfes, dass ein Winkel, der in einem Längsschnitt durch eine Verlängerung der Fläche der Senkung gebildet wird, kleiner ist als der Winkel der Mantelfläche der Schraubenmutter oder des Schraubenkopfes. Dies hat den Vorteil, dass vorzugsweise derjenige mit der Oberflächenstruktur ausgeführte Bereich der Mantelfläche zuerst die Wände der Senkung berührt, der zu der Grundfläche benachbart ist. Daraus resultiert in einer Draufsicht auf die Grundfläche ein großer radialer Abstand zwischen der Mittelachse der Körpers und dem wirkenden Bereich der Mantelfläche. Durch diesen großen Abstand resultiert ein großer Hebel und daraus in Zusammenwirkung mit der aus der Reibung resultierenden Reibungskraft ein ausreichend hohes Reibungsdrehmoment, welches gegen das Anzugsdrehmoment der Schraube in der Schraubenmutter während einer Befestigung wirkt und umgekehrt. Dies erlaubt die Befestigung der Schraubenmutter oder des Schraubenkopfes auch ohne Werkzeug. Vorzugsweise ist der Winkel der Mantelfläche um 1° bis 5° größer als der Winkel der Senkung.

Im befestigten Zustand resultiert aus dieser Befestigungsanordnung auch eine Klemmwirkung zwischen Schraubenmutter oder dem Schraubenkopf und der Senkungsfläche, die ein ungewolltes Lösen wirksam verhindern kann.

Bei der Erfindung wird gemäß einem dritten Aspekt eine Schraubenmutter oder einen Schraubenkopf zum Befestigen eines Bauteils benutzt. Der Begriff Schraubenmutter wird nachfolgen stellvertretend auch für Schraubenkopf verwendet, da die Vorteile der Erfindung bei einem Schraubenkopf genauso genutzt werden können. Die Schraubenmutter umfasst einen Körper, der durch eine Grundfläche, eine Deckfläche sowie eine dazwischen verlaufende Mantelfläche gebildet ist. Ein Flächeninhalt der Grundfläche ist größer als ein Flächeninhalt der Deckfläche. Der Körper umfasst eine Bohrung, die von der Deckfläche ausgehend zumindest teilweise zwischen Deckfläche und Grundfläche verläuft. Bei einer Schraubenmutter ist ein Innengewinde vorgegebener Größe vorgesehen. Der Grundfläche ist in einem vorgegebenen radialen Abstand zu einem Mittelpunkt der Grundfläche eine ringförmige Ausnehmung zugeordnet, die in einer Draufsicht auf die Grundfläche parallel zu einer Außenkante der Grundfläche verläuft.

Eine derartige Schraubenmutter oder ein derartiger Schraubenkopf hat den Vorteil, dass, in einer korrespondierend ausgebildeten Senkung des Bauteils, so z.B. Senkbohrung, angeordnet, eine werkzeuglose Befestigung möglich ist.

Dabei bildet vorzugsweise die Grundfläche der Schraubenmutter einen Teil einer Oberfläche des Bauteils und die Deckfläche ist der Senkung zugewandt.

Der Körper weist eine zwischen der Grundfläche und Deckfläche verlaufende Mantelfläche auf. Die Mantelfläche weist in einem Längsschnitt betrachtet einen geradlinigen oder gebogenen Verlauf zwischen der Grundfläche und Deckfläche auf.

Die Ebenen der Grundfläche und Deckfläche verlaufen vorzugsweise parallel.

Der Körper der Schraubenmutter oder des Schraubenkopfes kann beispielweise aus Metall bestehen, so z.B. Edelstahl, Messing, Aluminium oder einem anderen Metall oder einer Metalllegierung. Grundsätzlich kann der Körper aber auch aus jedem anderen für die jeweilige Befestigung des Bauteils erforderlichen oder passenden Material hergestellt sein.

Die Bohrung geht immer von der Deckfläche aus. Dabei kann die Bohrung komplett durch den Körper oder alternativ als Sacklochbohrung nur teilweise durch diesen verlaufen. Vorzugsweise verläuft die Bohrung ausgehend von dem Mittelpunkt der Deckfläche in Normalenrichtung der Deckfläche in Richtung der Grundfläche. Das Innengewinde ist beispielsweise als metrisches ISO Gewinde ausgeführt. Es kann aber auch einer anderen Norm entsprechen.

Die ringförmige Ausnehmung weist eine vorgegebene Breite und Tiefe auf und ist vorzugsweise konzentrisch um den Mittelpunkt der Grundfläche angeordnet. Während einer Befestigung der Schraubenmutter oder des Schraubenkopfes in einer zugeordneten Senkung bewirkt die Ausnehmung in dem äußeren Bereich des Körpers, der in einer Draufsicht dem Bereich zwischen der Ausnehmung und der Außenkante der Grundfläche zugeordnet ist, eine elastische Verformung. Diese bewirkt eine Klemmwirkung zwischen Mantelfläche und Senkungsfläche und erhöht damit eine Reibung zwischen diesen Flächen. Dadurch resultiert ein Reibungsdrehmoment, welches dem Anzugsdrehmoment, welches eine Schraube während der Befestigung auf die Schraubenmutter oder den Schraubenkopf auswirkt, derart entgegenwirkt, dass sich die Schraubenmutter oder der Schraubenkopf nicht "mitdreht". Dies ermöglicht eine Befestigung der Schrauben bei der ein Werkzeug nur entweder an dem Schraubenkopf oder an der Schraubenmutter angesetzt werden muss.

In einer vorteilhaften Ausgestaltung des dritten Aspekts weist in einer Draufsicht eine dem Mittelpunkt der Grundfläche zugewandten Innenkante der Ausnehmung einen vorgegebenen radialen Abstand zu einer Gewindeaußenlinie auf. Die Gewindeaußenlinie ist dem Nenndurchmesser des Innengewindes zugeordnet. D.h. zwischen gegenüberliegenden Punkten der Gewindeaußenlinie wird über den Mittelpunt der Nenndurchmesser vorgegeben. Unter dem Nenndurchmesser oder auch Außendurchmesser des Innengewindes ist in diesem Zusammenhang der größte Durchmesser einer Gewindegeometrie zu verstehen, die als Innengewinde in dem Körper ausgeführt ist. Durch den vorgegebenen Abstand zwischen Gewindeaußenlinie und Ausnehmung kann gewährleistet werden, dass das Innengewinde möglichst viele Gewindegänge in dem Körper umfasst, so dass eine zuverlässige Befestigung des Bauteils mittels der Schraubenmutter möglich ist.

In einer weiteren vorteilhaften Ausgestaltung des dritten Aspekts weist der Körper mehrere Schlitze auf, die jeweils zumindest in die Mantelfläche und die Grundfläche hineinragen. Dabei sind die Schlitze derart voneinander beabstandet, dass eine Federwirkung während einer Befestigung der Schraubenmutter oder des Schraubenkopfes im Bereich der Mantelfläche resultiert, der zu der Grundfläche benachbart ist. Diese Ausgestaltung hat dann einen Vorteil, wenn die Schraubenmutter oder der Schraubenkopf zum Befestigen in eine Senkung eingeführt wird, deren Winkel kleiner ist als der Winkel der Mantelfläche. In diesem Fall berührt nämlich vorzugsweise der mit den Schlitzen behaftete Bereich der Mantelfläche zuerst die Senkungsfläche des Bauteils, wodurch die zwischen den Schlitzen angeordneten Bereiche des Körpers, die im weiteren auch als Zinken bezeichnet werden, vorzugsweise elastisch verformt werden. Diese elastische Verformung in diesem Bereich der Schraubenmutter oder dem Schraubenkopf hat eine reibungserhöhende Wirkung und erlaubt damit eine werkzeuglose Befestigung. Des Weiteren kann in einem befestigten Zustand eine Klemmwirkung mittels der Schlitze zwischen der Schraubenmutter oder des Schraubenkopfes und der Senkung im Bereich der Schlitze erreicht werden. Dies kann wirkungsvoll ein ungewolltes Lösen, so z.B. ein "Losrütteln", der Schraubenmutter oder des Schraubenkopfes während einer dynamischen Belastung des Bauteils verhindern.

Die Schlitze können gerade, gebogen oder schräg zueinander und/oder zur Achse der Schraube oder der Mutter ausgebildet sein. Die Zinken können unterschiedliche und/oder sich entlang der Schlitze radial und/oder tangential verändernde Dicken haben

In einer weiteren vorteilhaften Ausgestaltung des dritten Aspekts reichen die mehreren Schlitze in der Draufsicht auf die Grundfläche bis zu einer von dem Mittelpunkt der Grundfläche abgewandten Außenkante der Ausnehmung. Die Zinken sind Teil des Körpers. Sie stehen im Bereich der Ausnehmung frei und sind nur im Bereich unterhalb der Ausnehmung gekoppelt. Beispielsweise erfolgt die Herstellung der Ausnehmung mittels eines Lochbohrers, einer Fräsung, durch Stanzen oder mit einem Stempel mittels einer Presse, beispielsweise einer Hammerpresse. Abhängig von einer Vorgabe der Tiefe der Ausnehmung kann somit eine Charakteristik der Federwirkung und somit der elastischen Verformung der Zinken vorgegeben werden. Je tiefer die Ausnehmung in dem Körper der Schraubenmutter oder des Schraubenkopfes ausgebildet ist, desto geringer ist eine zugeordnete Federkonstante. Auch ist eine Federcharakteristik abhängig von einer Anzahl der Zinken.

In einer weiteren vorteilhaften Ausgestaltung des dritten Aspektes ragen die mehreren Schlitze in einer Seitenansicht der Schraubenmutter oder des Schraubenkopfes ausgehend von der Grundfläche weiter in Richtung der Deckfläche in den Körper als die Ausnehmung. Dies bedeutet, dass der jeweilige Schlitz ausgehend von der Grundfläche tiefer in den Körper hineinragt als der tiefste Punkt der Ausnehmung. Auch dadurch kann die Charakteristik der Federwirkung beeinflusst werden. Je tiefer oder weiter der jeweilige Schlitz ausgehend von der Grundfläche in Richtung der Deckfläche in den Körper ragt, desto geringer die zugeordnete Federkonstante.

In einer weiteren vorteilhaften Ausgestaltung des dritten Aspekts weist der Körper in dem Bereich der Deckfläche und/oder in dem zu der Deckfläche benachbarten Bereich der Mantelfläche zumindest teilweise einen Kleber oder ein Klebeelement auf. Die Schraubenmutter oder der Schraubenkopf kann damit in eine entsprechende Senkung eingesetzt werden und verbleibt in dieser, ohne dass diese gehalten oder dass eine Schraube zumindest teilweise in die Schraubenmutter eingeschraubt werden muss. Dies ermöglicht die Befestigung des Bauteils nur über eine Seite.

In einer weiteren vorteilhaften Ausgestaltung des dritten Aspekts weist die Ausnehmung in einem Querschnitt eine rechteckige, trapezförmige oder dreieckige Form auf. Dadurch kann die Charakteristik der den Zinken zugeordneten Federwirkung beeinflusst werden.

Bei der Erfindung ist gemäß einem vierten Aspekt die Senkung in einer Oberfläche eines zu befestigenden Bauteils angeordnet. Die Form der Senkung korrespondiert zu der Form des Körpers der Schraubenmutter oder des Schraubenkopfes. Die Schraubenmutter oder der Schraubenkopf ist in einem befestigten Zustand derart in der Senkung angeordnet, dass die Grundfläche der Schraubenmutter oder des Schraubenkopfes bündig ist mit der Oberfläche des Bauteils. In dieser Anordnung ragen somit keine Elemente der Mutter oder des Kopfes aus der Oberfläche des zu befestigenden Bauteils heraus. Die Senkungsfläche der Senkung kann dabei eine glatte Oberfläche aufweisen. Aber grundsätzlich wäre auch eine aufgeraute Oberfläche möglich, um eine Reibung zwischen Senkungsfläche und Mantelfläche weiter zu erhöhen.

Erfindungsgemäß korrespondiert die Form der Senkung derart zu der Form der Schraubenmutter oder des Schraubenkopfes, dass ein Winkel, der in einem Längsschnitt durch eine Verlängerung der Fläche der Senkung gebildet wird, kleiner ist als der Winkel der Mantelfläche der Schraubenmutter oder des Schraubenkopfes. Dies hat den Vorteil, dass vorzugsweise der mittels der Ausnehmung beeinflusste und somit elastisch verformbare Bereich des Körpers zuerst die Senkungsfläche berührt. Daraus resultiert in einer Draufsicht auf die Grundfläche ein großer radialer Abstand zwischen der Mittelachse der Körpers und dem elastisch verformbaren Bereich des Körpers. Durch diesen großen Abstand resultiert ein großer Hebel und daraus in Zusammenwirkung mit der Federwirkung des elastisch verformbaren Bereiches des Körpers ein ausreichend hohes Drehmoment, welches gegen das Anzugsdrehmoment der Schraube in der Schraubenmutter während einer Befestigung wirkt. Dies erlaubt eine werkzeuglose Befestigung der Schraubenmutter oder des Schraubenkopfes. Vorzugsweise ist der Winkel der Mantelfläche um 1° bis 5° größer als der Winkel der Senkung.

Die Erfindung zeichnet sich ferner gemäß einem fünften Aspekt aus durch ein Verfahren zum Herstellen einer Schraubenmutter oder eines Schraubenkopfes nach Anspruch 17, bei dem eine ringförmige Ausnehmung in die Grundfläche des Körpers der Schraubenmutter derart gebohrt, gestanzt, gepresst, gesägt oder gefräst wird, dass diese in einer Draufsicht auf die Grundfläche parallel zu einer Außenkante der Grundfläche verläuft. Die Ausnehmung kann aber auch polygonal, insbesondere hexagonal sein.

Es ist außerdem von Vorteil, wenn die Schraubenmutter einen Hals mit einer Gewindeerweiterung an ihrer Deckfläche hat. Auf diese Weise lässt sich das Gewinde für eine höhere Festigkeit der Verbindung verlängern. Dieser Hals kann eine Nut beispielsweise für einen Dichtring haben. Der Hals kann in eine sich an die Senkung anschließende Bohrung eingeführt werden. Gerade mit dem Dichtring wird so eine Positionierung zur anschließenden Montage erreicht.

In einer vorteilhaften Ausgestaltung des dritten Aspekts werden mehrere Schlitze in den Körper derart gesägt, gepresst oder gefräst, dass der jeweilige Schlitz in die Grundfläche und Mantelfläche hineinragt.

Weitere Vorteile und Merkmale der vorliegenden Erfindung ergeben sich aus der folgenden beispielhaften Beschreibung derzeit bevorzugter Ausführungsformen.

Es zeigen:
- Fig. 1a, 1b: Schraubenmutter,
- Fig. 2: Schraubenmutter mit Senkung
- Fig. 3: Schraubenmutter in Senkung,
- Fig. 4a, 4b: Schraubenmutter in Senkung bei unterschiedlichen Winkeln,
- Fig. 5a, 5b: Schraubenmutter mit Schlitzen.
- Fig. 6a, 6b: Schraubenmutter,
- Fig. 7, 8: Schraubenmutter in räumlicher Darstellung,
- Fig. 9, 10: Schraubenmutter und Senkung,
- Fig. 11a, 11b: Schraubenmutter in Senkung bei unterschiedlichen Winkeln,
- Fig. 12: Schraubenmutter mit Schlitzen,
- Fig. 13: Werkzeug,
- Fig. 14: Schraubenmutter mit Werkzeugaufnahme,
- Fig. 15: Schraubenmutter mit Verlängerung,
- Fig. 16: Schraubenmutter mit Verlängerung und Werkzeugaufnahme,
- Fig. 17: Schraube mit Schraubenkopf,
- Fig. 18: Werkzeug mit Schraube, und
- Fig. 19: Werkzeug.

### Detaillierte Beschreibung von Ausführungsformen

In den Figuren werden gleiche Bezugszeichen für gleiche oder zumindest ähnliche Elemente, Komponenten oder Aspekte verwendet. Es wird darauf hingewiesen, dass die nachfolgend beschriebenen Ausführungsformen lediglich eine beschränkte Auswahl an möglichen Ausführungsvarianten der Erfindung darstellen und lediglich illustrativ zu sehen sind. Insbesondere ist es möglich, die Merkmale einzelner Ausführungsformen in geeigneter Weise miteinander zu kombinieren, so dass für den Fachmann mit den hier explizit dargestellten Ausführungsvarianten eine Vielzahl von verschiedenen Ausführungsformen als offensichtlich offenbart anzusehen sind.

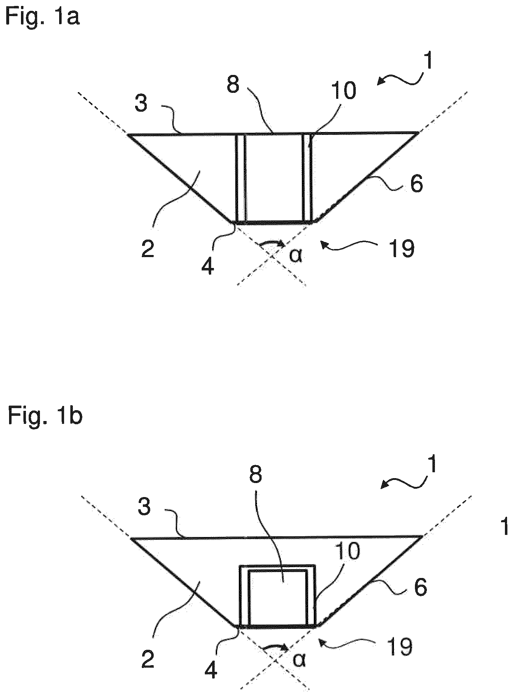

Fig. 1a zeigt eine Schraubenmutter 1 mit einem Körper 2 in einem Längsschnitt. Der Körper 2 weist eine Grundfläche 3 und eine Deckfläche 4 sowie eine dazwischen verlaufende Mantelfläche 6 auf. Die Grundfläche 3 weist dabei einen größeren Flächeninhalt auf als die Deckfläche 4. Die Ebene der Grundfläche 3 verläuft parallel zu der Ebene der Deckfläche 4. Der Körper 2 der Schraubenmutter 1 weist vorzugsweise eine kegelstumpfförmige Form auf.

Der Körper 2 umfasst darüber hinaus eine durch ihn verlaufende Bohrung 8 mit einem Innengewinde 10 vorgegebener Größe, so z.B. metrisches Gewinde der Größe M8. Vorzugsweise verläuft die Bohrung 8 ausgehend von dem Mittelpunkt der Deckfläche 4 in Normalenrichtung zur Ebene der Deckfläche 4. Grundsätzlich kann die Bohrung 8 aber auch anders verlaufen. Alternativ kann, wie in Fig. 1b dargestellt, die Bohrung 8 aber auch als Sacklochbohrung nur teilweise ausgehend von der Deckfläche 4 durch den Körper 2 verlaufen. Dies hat den Vorteil, dass die Grundfläche 3 der Schraubenmutter 1 eine glatte Oberfläche aufweist, während bei einer als Vollbohrung ausgebildeten durch den Körper 2 verlaufenden Bohrung 8 (siehe Fig. 1a) auf der Grundfläche 3 zumindest eine Bohrungsöffnung der Bohrung 8 vorhanden ist.

Im Längsschnitt betrachtet schließen die Verlängerungen der Seiten der Mantelfläche 6 einen Winkel α ein. Dieser Winkel α weist vorzugsweise einen Wert von größer gleich 60° auf, so z.B. 90°.

Die Mantelfläche 6 verläuft in einem Längsschnitt betrachtet vorzugsweise geradlinig zwischen der Grundfläche 3 und der Deckfläche 4. Grundsätzlich wäre aber auch ein gebogener Verlauf möglich.

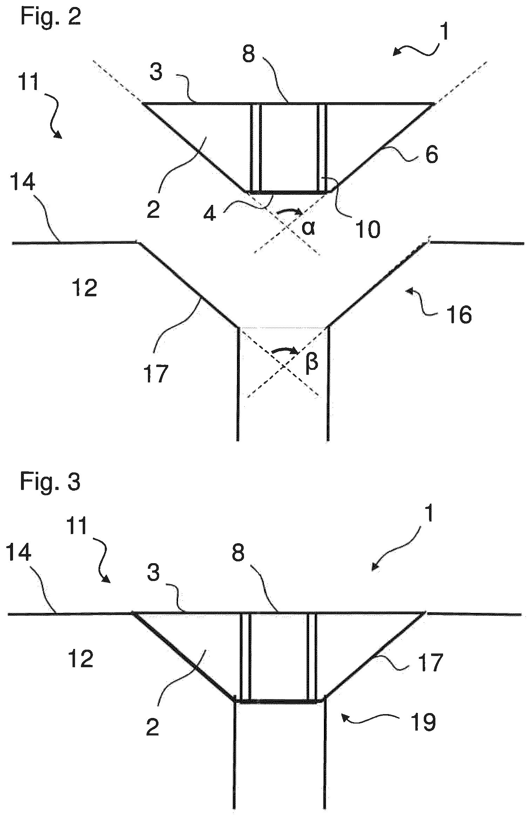

Die Mantelfläche 6 weist zumindest teilweise eine reibungserhöhende Oberflächenstruktur auf, so z.B. eine Verzahnung. Durch Zusammenwirkung dieser Oberflächenstruktur mit der Senkungsfläche 17 einer Senkung 16 eines zu befestigenden Bauteils 12 (siehe Fig. 2 und 3) resultiert eine Reibung, die ein Mitdrehen der Schraubenmutter 1 während einer Befestigung verhindert. Das ermöglicht die werkzeuglose Befestigung der Schraubenmutter 1, so dass keine Nuten oder Erhebungen auf der Grundfläche 3 der Schraubenmutter 1 zum Ansetzen eines Werkzeuges, so z.B. Schraubendreher, vorgesehen werden müssen. Die Oberflächenstruktur kann grundsätzlich auch eine andere Ausgestaltung als eine Verzahnung aufweisen. Auch kann die Oberflächenstruktur mittels einer Beschichtung der Mantelfläche 6 umgesetzt sein.

Der Körper 2 kann in einem Bereich 19 der Deckfläche 4 und/oder in dem zu der Deckfläche 4 benachbarten Bereich der Mantelfläche 6 einen Kleber, so z.B. einen Metallkleber, oder ein Klebeelement, so z.B. ein Klebestreifen, aufweisen.

Der Körper 2 der Schraubenmutter 1 ist beispielsweise aus Metall oder einer Metalllegierung gefertigt, kann aber alternativ auch aus einem anderen Material, so z.B. Kunststoff, hergestellt sein.

In Fig. 2 ist außer der Schraubenmutter 1 auch eine passende Senkung 16 dargestellt. Die Senkung 16 ist in einer Oberfläche 14 des zu befestigenden Bauteils 12 eingebracht und weist einen Winkel β auf, der eingeschlossen wird durch die Senkungsfläche 17 der Senkung 16 (im Längsschnitt). Der Winkel β stimmt in diesem Ausführungsbeispiel mit dem Winkel α der Schraubenmutter 1 überein, so z.B. 90°.

Die Schraubenmutter 1 angeordnet in der Senkung 16 repräsentiert in diesem Zusammenhang eine Befestigungsanordnung 11.

In Fig. 3 ist die Befestigungsanordnung 11 in einem befestigten Zustand dargestellt. In diesem Zustand bildet die Grundfläche 3 der Schraubenmutter 1 mit der Oberfläche 14 des Bauteils 12 eine ebene Oberfläche ohne störende Stufen oder Erhebungen. Einzig die Bohrungsöffnung der Bohrung 8 der Schraubenmutter 1 könnte hier als "störende" Vertiefung erscheinen. Würde die Bohrung 8 ausgehend von der Deckfläche 4 nur teilweise durch den Körper 2 verlaufen, wäre die Oberfläche 14 des Bauteils 12 und die Grundfläche 3 der Schraubenmutter 1 ohne Stufen oder Erhebungen oder Vertiefungen ausgebildet.

Ist die Schraubenmutter 1 in der Senkung 16 angeordnet, kann der Kleber oder das Klebeelement, der im Bereich 19 zwischen dem Körper 2 der Schraubenmutter 1 und der Senkung 16 angeordnet ist, eine Klebung derart ermöglichen, dass die Schraubenmutter 1 in der Senkung 16 gehalten wird, auch ohne dass eine Schraube zumindest teilweise eingeschraubt ist. Das ist besonders dann hilfreich, wenn die Befestigung des Bauteils 12 nur von einer Seite möglich ist.

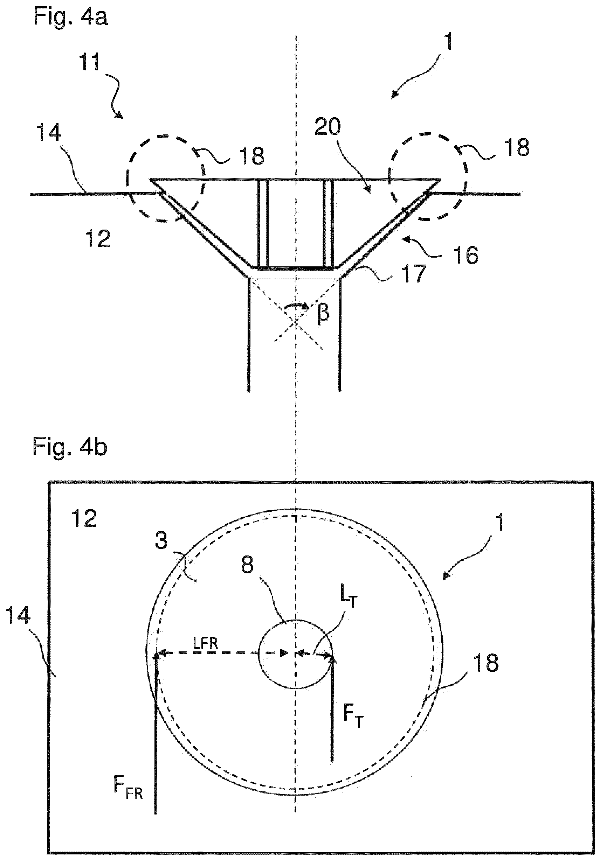

In Fig. 4a ist eine Befestigungsanordnung 11 mit der Schraubenmutter 1 und dem Bauteil 12 dargestellt. Die Oberfläche 14 des Bauteils 12 weist eine Senkung 16 auf, in der die Schraubenmutter 1 in einem noch nicht befestigten Zustand angeordnet ist. Die Schraubenmutter 1 weist einen Bereich 20 der Mantelfläche 6 auf, der zu der Grundfläche 3 der Schraubenmutter 1 benachbart ist. Nur dieser weist eine reibungserhöhende Oberflächenstruktur auf. Zu erkennen ist ferner, dass der Winkel β der Senkungsfläche 17 kleiner ist als der Winkel α der Mantelfläche 6 der Schraubenmutter 1. Beispielsweise nimmt der Winkel α der Mantelfläche 6 einen Wert von 91° ein und der Winkel β der Senkungsfläche 17 einen Wert von 90°. Vorzugsweise ist der Winkel α der Mantelfläche 6 um 1° bis 5° größer als der Winkel β der Senkungsfläche 17.

Deshalb berührt nur der mit der Oberflächenstruktur obere ausgeführte Bereich 20 der Mantelfläche 6 die Senkungsfläche 17 der Senkung 16 in einem Kontaktbereich 18.

In Fig. 4b ist die Befestigungsanordnung 11 der Fig. 4a in einer Draufsicht auf die Grundfläche 3 dargestellt. Vorzugsweise hat die Schraubenmutter 1 eine kegelstumpfförmige Kontur und damit in der Draufsicht eine kreisrunde Form. Der Kontaktbereich 18 zwischen Mantelfläche 6 und Senkungsfläche 17 ist hier als gestrichelter Kreis dargestellt. Auch die Bohrung 8 ist als Kreislinie gezeigt.

Während einer Befestigung einer Schraube (nicht dargestellt) in der Schraubenmutter 1 übt diese über einen Hebel L_{T} eine Anzugskraft F_{T} auf die Schraubenmutter 1 aus. Daraus resultiert ein entsprechendes Anzugsdrehmoment. Dem wirkt eine Reibungskraft F_{FR} über einen Hebel L_{FR} und ein daraus resultierendes Reibungsdrehmoment entgegen. Die Reibungskraft F_{FR} wirkt hier in dem Kontaktbereich 18 zwischen Schraubenmutter 1 und der Senkung 16. Aufgrund der Ausgestaltung der Oberflächenstruktur der Mantelfläche 6 wirkt das Reibungsdrehmoment dem durch die Schraube bewirkten Anzugsdrehmoment derart entgegen, so dass während der Befestigung der Schraubenmutter 1 ein Werkzeug zum Gegenhalten nicht erforderlich ist.

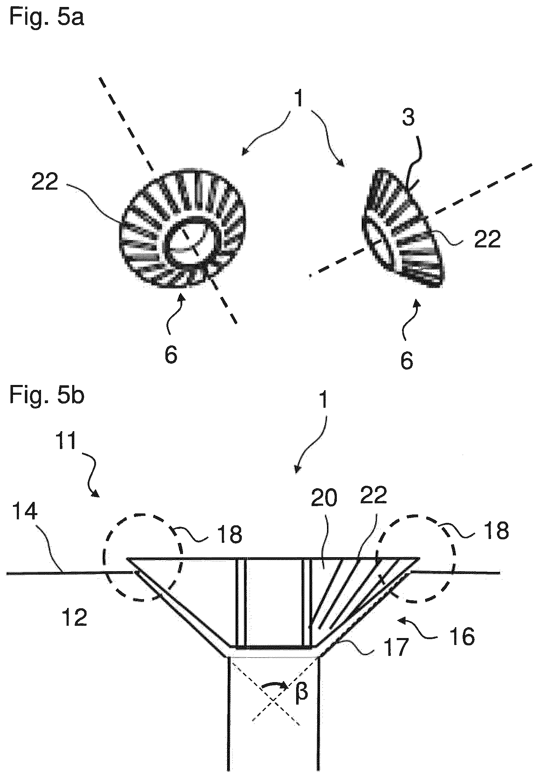

In Fig. 5a sind zwei perspektivische Darstellungen einer Schraubenmutter 1 gezeigt. Die jeweilige Schraubenmutter 1 umfasst mehrere Schlitze 22, die jeweils in die Grundfläche 3 als auch Mantelfläche 6 hineinragen.

In Fig. 5b ist die Schraubenmutter 1 mit Schlitzen 22 in der Senkung 16 in einem Längsschnitt dargestellt. Obwohl in Fig. 5b nur angedeutet, verteilen sich die Schlitze 22 vorzugsweise vollumfänglich entlang des Umfangs der Schraubenmutter 1 in einem gleichen Abstand.

Auch in der Fig. 5b ist der Winkel β der Senkung 16 kleiner als der Winkel α der Mantelfläche 6 der Schraubenmutter 1. Dadurch berührt nur der obere Bereich der Mantelfläche 6 mit den Schlitzen 22 die Fläche der Senkung 16.

Die Schlitze 22 bewirken eine Federwirkung zumindest in axialer Richtung. Dadurch kann auch eine aus der Federwirkung resultierende elastische Verformung dieses Bereiches der Schraubenmutter 1 eine reibungserhöhende Wirkung der Mantelfläche 6 auf die Senkungsfläche 17 entfalten. In Kombination mit der Oberflächenstruktur der Mantelfläche 6 führt die Federwirkung bereits in einem noch nicht befestigten Zustand zu einer Reibung zwischen Senkung 16 und der Mantelfläche 6, so dass kein Werkzeug während der Befestigung erforderlich ist. Auch kann in einem befestigten Zustand eine Klemmwirkung mittels der Schlitze 22 zwischen der Schraubenmutter 1 und der Senkung 16 im Bereich der Schlitze 22 erreicht werden. Dies kann wirkungsvoll ein ungewolltes Lösen, so z.B. ein "Losrütteln", der Schraubenmutter 1 während einer Belastung des Bauteils 12 verhindern.

Neben der kegelstumpfförmigen Kontur kann der Körper der Schraubenmutter auch eine pyramidenstumpfförmige Kontur mit mehreren Kanten aufweisen, die jeweils in verschiedenen Bereichen der Mantelfläche ausgehend von der Grundfläche zumindest teilweise in Richtung der Deckfläche verlaufen. Dabei kann die Schraubenmutter mit der pyramidenstumpfförmigen Kontur alle Merkmale aufweisen, die auch für die Schraubenmutter mit kegelstumpfförmiger Kontur anwendbar sind. Auch kann die pyramidenstumpfförmige Schraubenmutter in einer Kegelsenkung befestigt werden, die zu einer kegelstumpfförmigen Schraubenmutter korrespondiert. In diesem Fall kann für die Schraubenmutter mit pyramidenstumpfförmiger Kontur aber die Oberflächenstruktur der Mantelfläche wegfallen, da die Kanten der als Pyramidenstumpf ausgeführten Schraubenmutter während der Befestigung derart in die Senkungsfläche der Senkung greifen, dass ein Werkzeug während des Befestigens nicht erforderlich ist.

Zusätzlich kann die Schraubenmutter in der Bohrung auch eine Schraubensicherung in Form eines Kunststoffringes aufweisen. Die Schraubensicherung ist dabei vorzugsweise ausgehend von der Deckfläche im oberen Bereich, sprich im Bereich angeordnet, der der Grundfläche zugeordnet ist. Die Schraubensicherung sichert im befestigten Zustand eine in die Schraubenmutter eingedrehte Schraube vor dem Losdrehen und sichert damit vor einem ungewollten Lösen.

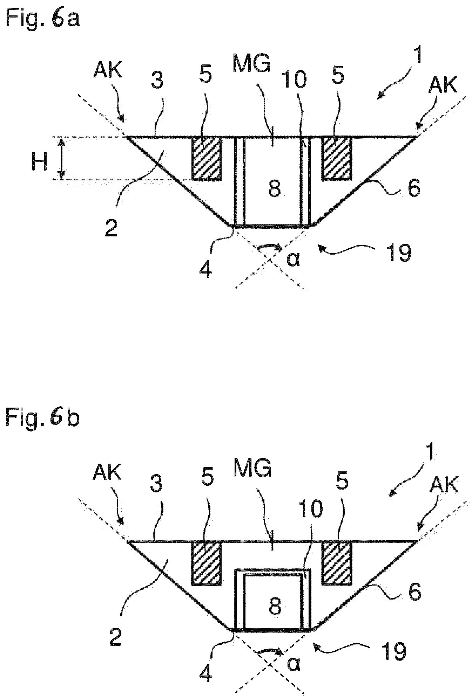

Fig. 6a zeigt eine Schraubenmutter 1 mit einem Körper 2 in einem Längsschnitt. Der Körper 2 weist eine Grundfläche 3 und eine Deckfläche 4 sowie eine dazwischen verlaufende Mantelfläche 6 auf. Die Grundfläche 3 weist dabei einen größeren Flächeninhalt auf als die Deckfläche 4. Die Ebene der Grundfläche 3 verläuft parallel zu der Ebene der Deckfläche 4. Der Körper 2 der Schraubenmutter 1 weist vorzugsweise eine kegelstumpfförmige Form auf.

Der Körper 2 umfasst darüber hinaus eine durch ihn verlaufende Bohrung 8 mit einem Innengewinde 10 vorgegebener Größe, so z.B. ein metrisches Gewinde der Größe M8. Vorzugsweise verläuft die Bohrung 8 ausgehend von dem Mittelpunkt der Deckfläche 4 in Normalenrichtung zu der Ebene der Deckfläche 4. Grundsätzlich kann die Bohrung 8 aber auch anders verlaufen. Alternativ kann, wie in Fig. 6b dargestellt, die Bohrung 8 aber auch als Sacklochbohrung nur teilweise ausgehend von der Deckfläche 4 durch den Körper 2 verlaufen.

Darüber hinaus ist dem Körper 2 eine Ausnehmung 5 zugeordnet. Diese verläuft ausgehend von der Grundfläche 3 in Richtung der Deckfläche 4 und weist eine vorgegebene Tiefe H auf. Vorzugsweise ist die Ausnehmung 5 ringförmig um einen Mittelpunkt MG der Grundfläche 3 herum angeordnet und verläuft parallel zu einer Außenkante AK der Grundfläche 3.

Im Längsschnitt betrachtet schließen die Verlängerungen der Seiten der Mantelfläche 6 einen Winkel α ein. Dieser Winkel α weist vorzugsweise einen Wert von größer gleich 60° auf, so z.B. 90°.

Die Mantelfläche 6 verläuft in einem Längsschnitt betrachtet vorzugsweise geradlinig zwischen der Grundfläche 3 und der Deckfläche 4. Grundsätzlich wäre aber auch ein gebogener Verlauf möglich.

Der Körper 2 kann in einem Bereich 19 der Deckfläche 4 und/oder in dem zu der Deckfläche 4 benachbarten Bereich der Mantelfläche 6 einen Kleber, so z.B. einen Metallkleber, oder ein Klebeelement, so z.B. einen Klebestreifen, aufweisen.

Der Körper 2 der Schraubenmutter 1 ist beispielsweise aus Metall oder einer Metalllegierung gefertigt, kann aber alternativ auch aus einem anderen Material, so z.B. Kunststoff, hergestellt sein.

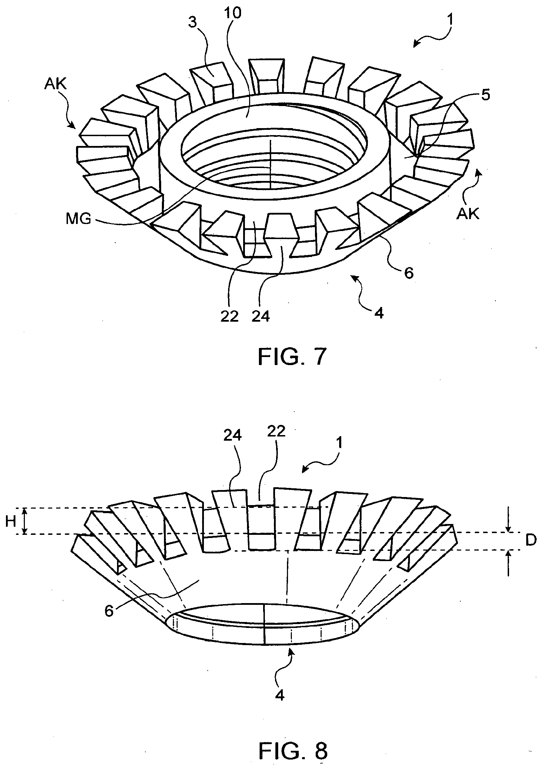

In Fig. 7 und 8 ist die Schraubenmutter 1 jeweils in einer räumlichen Ansicht dargestellt. Dabei weist die Grundfläche 3 die Ausnehmung 5 auf, die ringförmig um den Mittelpunkt MG der Grundfläche 3 verläuft und dabei einen Durchmesser aufweist, der größer ist als ein Nenndurchmesser des Innengewindes 10. Die Ausnehmung 5 verläuft parallel zu der Außenkante AK der Grundfläche 3. Die Ausnehmung 5 weist in radialer Richtung des Körpers 2 eine vorgegebene Breite und in einem Querschnitt eine rechteckige Form auf. Eine Innenkante der Ausnehmung ist dem Mittelpunkt MG der Grundfläche 3 zugewandt und eine Außenkante ist der weiter entfernten und somit der dem Mittelpunkt MG abgewandten Kante der Ausnehmung 5 zugeordnet.

Ferner sind in Fig. 7 und Fig. 8 eine Vielzahl von Schlitzen 22 dargestellt. Die Schlitze 22 sind gleich ausgebildet und ragen sowohl in die Mantelfläche 6 als auch in die Grundfläche 3 hinein. Zwischen zwei Schlitzen 22 bildet sich jeweils ein Zinken 24. Jeder Zinken 24 bildet mit seiner Oberseite einen Teil der Grundfläche 3, mit einer ersten Seite einen Teil einer Außenkante der Ausnehmung 5 und mit einer gegenüberliegenden zweiten Seite einen Teil der Mantelfläche 6. Die Zinken 24 sind Teil des Körpers 2 der Schraubenmutter 1.

Die Schlitze 22 können in einer Draufsicht auf die Mantelfläche 6 ausgehend von der Grundfläche 3 weiter in Richtung der Deckfläche 4 in den Körper 2 reichen als die Ausnehmung 5 (siehe Fig. 8). D.h. die Schlitze 22 können um eine Differenztiefe D tiefer in den Körper 2 angeordnet sein als die Tiefe H der Ausnehmung 5. Dadurch stehen die Zinken 24 Bereich der Ausnehmung 5 frei und sind nur im Bereich unterhalb der Ausnehmung 5 an dem Körper 2 gekoppelt. Abhängig von der Tiefe H der Ausnehmung 5 in dem Körper 2 und/oder abhängig von der Vorgabe der Differenztiefe D kann somit eine Charakteristik einer elastischen Verformung der Zinken 24 vorgegeben werden.

In einer weiteren Ausführungsform kann die Schraubenmutter 1 zwar die Ausnehmung 5 entsprechend der Ausgestaltung in Fig. 7 und Fig. 8 umfassen, aber ohne Schlitze 22 und Zinken 24 ausgeführt sein.

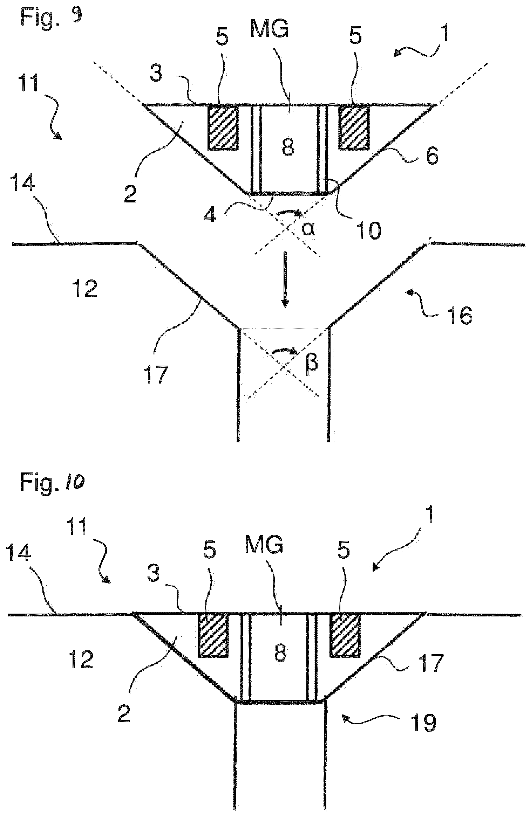

In Fig. 9 ist neben der Schraubenmutter 1 auch eine passende Senkung 16 dargestellt. Die Senkung 16 ist in einer Oberfläche 14 des zu befestigenden Bauteils 12 eingebracht und weist einen Winkel β auf, der durch die Senkungsfläche 17 der Senkung 16 (im Längsschnitt) eingeschlossen wird. Der Winkel β stimmt in diesem Ausführungsbeispiel mit dem Winkel α der Schraubenmutter 1 überein, so z.B. 90°.

Die Schraubenmutter 1 angeordnet in der Senkung 16 des Bauteils 12 repräsentiert in diesem Zusammenhang eine Befestigungsanordnung 11.

In Fig. 10 ist die Befestigungsanordnung 11 dargestellt. In diesem Zustand bildet die Grundfläche 3 der Schraubenmutter 1 mit der Oberfläche 14 des Bauteils 12 eine bündige Oberfläche. Nur die Bohrungsöffnung der Bohrung 8 der Schraubenmutter 1 als auch die Ausnehmung 5 erscheint in diesem Ausführungsbeispiel als Vertiefung. Würde die Bohrung 8 ausgehend von der Deckfläche 4 als Sacklochbohrung ausgeführt sein, wäre lediglich die ringförmige Ausnehmung 5 als Vertiefung ausgebildet.

Ist die Schraubenmutter 1 in der Senkung 16 angeordnet, kann der Kleber oder das Klebeelement, der im Bereich 19 zwischen dem Körper 2 der Schraubenmutter 1 und der Senkung 16 angeordnet ist, eine Klebung derart ermöglichen, dass die Schraubenmutter 1 in der Senkung 16 gehalten wird, auch ohne dass eine Schraube zumindest teilweise eingeschraubt ist. Das ist besonders dann hilfreich, wenn die Befestigung des Bauteils 12 nur von einer Seite möglich ist.

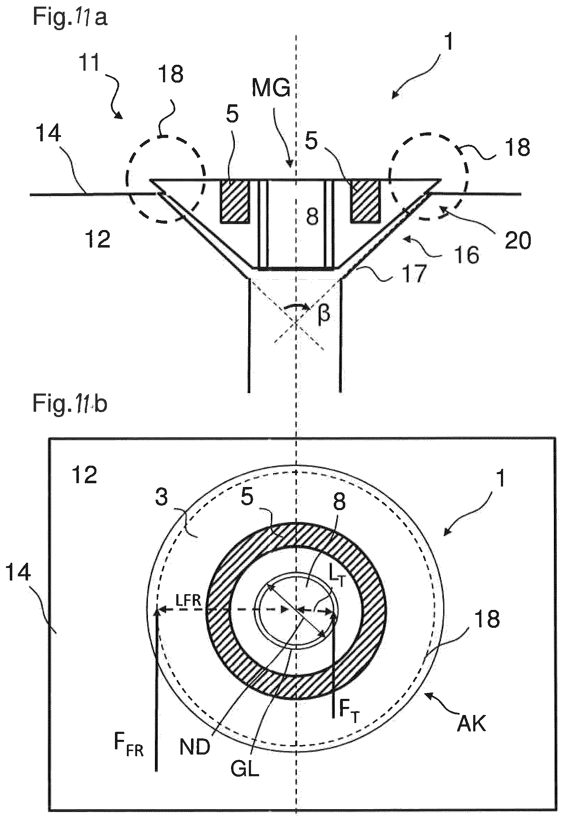

In Fig. 11a ist eine Befestigungsanordnung 11 mit der Schraubenmutter 1 und dem Bauteil 12 dargestellt. Die Oberfläche 14 des Bauteils 12 weist eine Senkung 16 auf, in der die Schraubenmutter 1 in einem noch nicht befestigten Zustand angeordnet ist. Die Schraubenmutter 1 weist einen Bereich 20 der Mantelfläche 6 auf, der zu der Grundfläche 3 der Schraubenmutter 1 benachbart ist. Dieser Bereich 20 ist aufgrund der Ausnehmung 5 besonders elastisch verformbar. Zu erkennen ist ferner, dass der Winkel β der Senkungsfläche 17 kleiner ist als der Winkel α der Mantelfläche 6 der Schraubenmutter 1. Beispielsweise nimmt der Winkel α der Mantelfläche 6 einen Wert von 91° ein und der Winkel β der Senkungsfläche 17 einen Wert von 90°. Vorzugsweise ist der Winkel α der Mantelfläche 6 um 1° bis 5° größer als der Winkel β der Senkungsfläche 17. Deshalb berührt nur der mit der obere ausgeführte Bereich 20 der Mantelfläche 6 die Senkungsfläche 17 der Senkung 16 in einem Kontaktbereich 18.

In Fig. 11b ist die Befestigungsanordnung 11 der Fig. 11a in einer Draufsicht auf die Grundfläche 3 dargestellt. Vorzugsweise hat die Schraubenmutter 1 eine kegelstumpfförmige Kontur und damit in der Draufsicht eine Kreisform. Der Kontaktbereich 18 zwischen Mantelfläche 6 und Senkungsfläche 17 ist hier als gestrichelter Kreis dargestellt. Auch die Bohrung 8 ist als Kreislinie und die Ausnehmung 5 ist als schraffierter Ring gezeigt.

Während einer Befestigung einer Schraube (nicht dargestellt) in der Schraubenmutter 1 übt diese über einen Hebel L_{T} eine Anzugskraft F_{T} auf die Schraubenmutter 1 aus. Daraus resultiert ein entsprechendes Anzugsdrehmoment. Dem wirkt eine Reibungskraft F_{FR} über einen Hebel L_{FR} und ein daraus resultierendes Reibungsdrehmoment entgegen. Die Reibungskraft F_{FR} wirkt hier in dem Kontaktbereich 18 zwischen Schraubenmutter 1 und der Senkung 16. Die Reibungskraft F_{FR} resultiert aus einer Klemmwirkung zwischen Mantelfläche 6 und Senkungsfläche 17. Diese Klemmwirkung resultiert während der Befestigung wiederrum aus einer elastischen Verformung des äußeren Bereiches 20, der in einer Draufsicht dem Bereich zwischen der Ausnehmung 5 und der Außenkante AK der Grundfläche zugeordnet ist. Das der Reibungskraft F_{FR} zugeordnete Reibungsdrehmoment wirkt dem durch die Schraube bewirkten Anzugsdrehmoment derart entgegen, so dass während der Befestigung der Schraubenmutter 1 ein Werkzeug zum Gegenhalten nicht erforderlich ist.

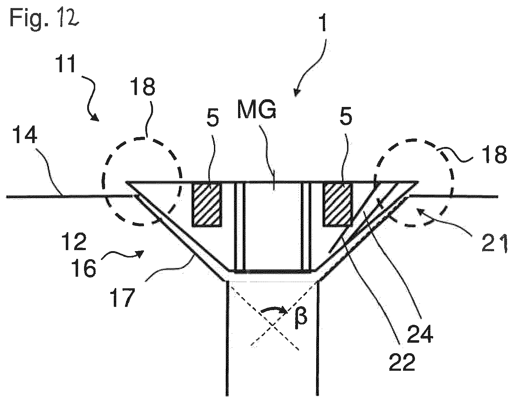

Entsprechend der Darstellung in Fig. 12 weist die Schraubenmutter 1 mehrere Schlitze 22 auf, die jeweils in die Grundfläche 3 als auch Mantelfläche 6 hineinragen. Die Schraubenmutter 1 ist in der Senkung 16 dargestellt. Obwohl in Fig. 12 nur angedeutet, verteilen sich die Schlitze 22 vorzugsweise vollumfänglich entlang des Umfangs der Schraubenmutter 1 in einem gleichen Abstand.

Auch in der Fig. 12 ist der Winkel β der Senkung 16 kleiner als der Winkel α der Mantelfläche 6 der Schraubenmutter 1 vorgegeben. Hier sind die zwischen den Schlitzen 22 ausgebildeten Zinken 24 dem elastisch verformbaren Bereich 21 zugeordnet. Das bedeutet, dass zunächst nur der mit den Zinken 24 ausgebildete elastisch verformbare Bereich 21 die Senkungsfläche 17 berührt.

Aufgrund der ringförmigen Ausnehmung 5 können sich die Zinken 24 im Bereich 21 elastisch verformen, wodurch eine Klemmwirkung zwischen Mantelfläche 6 und der Senkungsfläche 17 resultiert. Dies hat wiederrum eine reibungserhöhende Wirkung der Mantelfläche 6 auf die Senkungsfläche 17 zur Folge, die eine werkzeuglose Befestigung der Schraubenmutter 1 ermöglicht. Dabei kann die Charakteristik der elastischen Verformung der Zinken 24 durch eine Veränderung der Tiefe H der Ausnehmung 5 und/oder durch eine Veränderung der Tiefe oder Weite beeinflusst werden, die der jeweilige Schlitz 22 ausgehend von der Grundfläche 3 in Richtung der Deckfläche 4 in den Körper 2 ragt.

Das Zusammenwirken zwischen Zinken 24 und der Senkung 16 kann darüber hinaus ein ungewolltes Lösen, so z.B. ein "Losrütteln", der Schraubenmutter 1 während einer dynamischen Belastung des Bauteils 12 verhindern.

Zusätzlich kann die Schraubenmutter in der Bohrung auch eine Schraubensicherung in Form eines Kunststoffringes aufweisen. Die Schraubensicherung sichert im befestigten Zustand eine in die Schraubenmutter eingedrehte Schraube vor dem Losdrehen und sichert damit vor einem ungewollten Lösen.

In einem Verfahren zum Herstellen einer Schraubenmutter 1 wird die ringförmige Ausnehmung 5 in die Grundfläche 3 gebohrt, gestanzt, gepresst, gesägt oder gefräst. Davor oder danach können in dem Verfahren zum Herstellen auch eine Vielzahl von Schlitzen 22 und damit einhergehend eine Vielzahl von Zinken 24 gebildet werden. Dabei werden die Schlitze 22 derart gesägt, gepresst oder gefräst, dass diese jeweils sowohl in die Grundfläche 3 als auch die Mantelfläche 6 hineinragen.

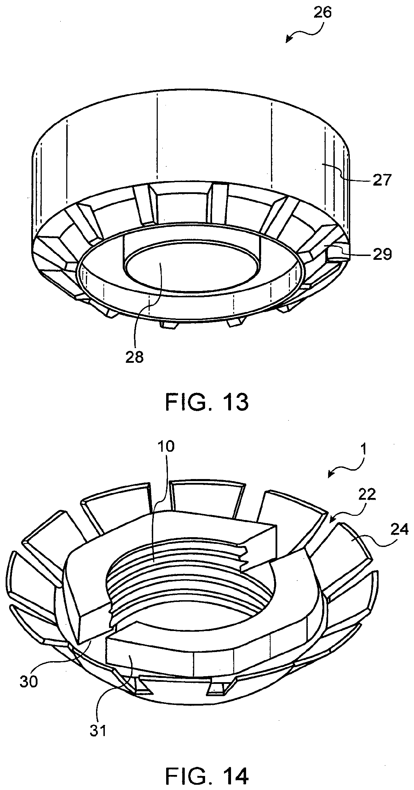

Fig. 13 zeigt ein Werkzeug 26 für die Schraubenmutter 1 oder den Schraubenkopf. Wie sich der Figur entnehmen lässt, hat das Werkzeug 26 einen Körper 27, der bei dem gezeigten Ausführungsbeispiel zylinderförmig ausgebildet ist und beispielsweise als sogenannte Nuss für eine Ratsche ausgebildet sein kann. Der Figur ist zu entnehmen, dass an einem in der Figur unteren Ende des Körpers 27 mehrere Vorsprünge ausgebildet sind. In einem zentralen Bereich ist ein Vorsprung 28 dargestellt. Der Vorsprung 28 ist im Wesentlichen zylinderförmig ausgebildet. Darüber hinaus weist der Körper 27 an seinem Außenumfang den Vorsprung 28 umgebend eine Vielzahl Rippen 29 auf, von denen der besseren Übersicht wegen nur eine Rippe 29 mit einem Bezugszeichen versehen ist. Die Rippen 29 dienen zum Eingreifen in die Schlitze 22 und sind zur Zentrierung mit einem Ring von konischer Struktur verbunden.

Fig. 14 zeigt ein weiteres Ausführungsbeispiel einer Schraubenmutter 1 mit verschiedenen Werkzeugaufnahmen. Wie sich der Figur entnehmen lässt, hat die Schraubenmutter 1 an ihrem Außenumfang die von den Schlitzen 22 getrennten Zinken 24, zwischen die die Rippen 29 des Werkzeugs 26 eingreifen können. Darüber hinaus hat die Schraubenmutter 1 einen Schlitz 30 als Aufnahme für einen Schraubendreher und am Außenumfang eines das Innengewinde 10 umgebenden Randes einen Sechskant 31. Auf bekannte Weise kann der Schlitz 30 mit einem Schraubendreher als Werkzeug und der Sechskant 31 mit einem Schraubenschlüssel oder einer Nuss als Werkzeug betätigt werden.

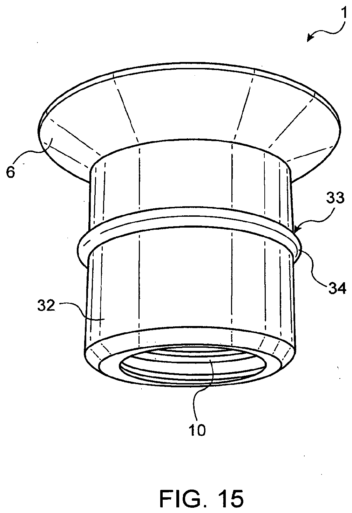

Fig. 15 zeigt eine weitere Schraubenmutter 1 mit den Erfindungsmerkmalen. Gleiche Elemente tragen die gleichen Bezugsziffern. Wie sich der Figur entnehmen lässt, hat die Schraubenmutter 1 an dem verjüngten Ende der Mantelfläche 6 einen Hals 32. Der Hals 32 ist bei dem gezeigten Ausführungsbeispiel zylinderförmig ausgebildet und hat in seinem Inneren eine Erweiterung des Innengewindes 10. Wie sich der Figur außerdem entnehmen lässt, hat der Hals 32 in seinem mittleren Bereich eine Nut 33 zur Aufnahme eines Dichtringes 34. Der Dichtring 34 dient zum Sichern der Schraubenmutter 1 in einem zylinderförmigen Kanal.

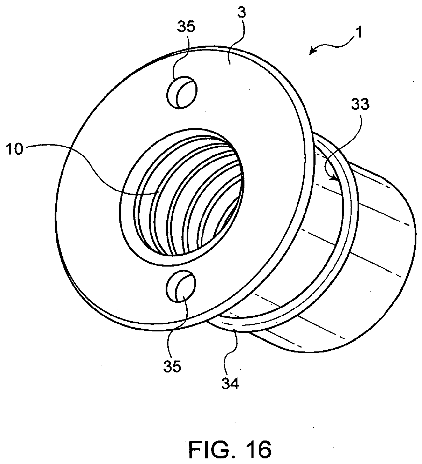

Fig. 16 zeigt eine perspektivische Darstellung der Schraubenmutter 1 von Fig. 15 schräg von oben gesehen. Wie sich der Figur entnehmen lässt, hat die Schraubenmutter 1 an einander gegenüberliegenden Seiten der Grundfläche Einbuchtungen 35. Die Einbuchtungen 35 sind bei dem gezeigten Ausführungsbeispiel als Sackbohrungen 35 ausgeführt und dienen zur Aufnahme eines Werkzeuges ähnlich wie dem zum Wechseln der Trennscheibe eines Winkelschleifers.

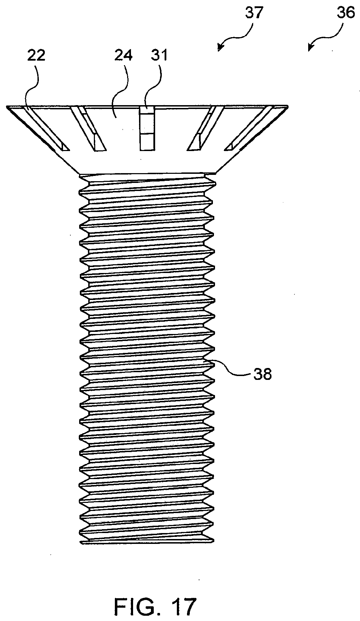

Fig. 17 zeigt eine Schraube 36 als ein weiteres Ausführungsbeispiel mit den Erfindungsmerkmalen. Die Schraube 36 hat einen Schraubenkopf 37 ähnlich den bereits beschriebenen Schraubenmuttern 1 und ein Außengewinde 38. Ähnlich wie die vorstehend beschriebenen Schraubenmuttern 1 hat der Schraubenkopf 37 die Schlitze 22, die Zinken 24 und den Sechskant 31. Jede andere geeignete Ausführungsform der vorstehend beschriebenen Schraubenmuttern 1 ist hier ebenfalls möglich. Die Funktionsweise des Schraubenkopfes 37 entspricht den vorstehend beschriebenen Schraubenmuttern 1.

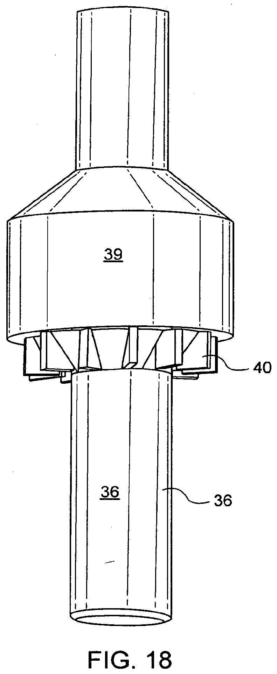

Fig. 18 zeigt ein Werkzeug 39 zum Herstellen der Schraube 36. Bei dem Werkzeug 39 handelt es sich um den Stempel 39 einer nicht in der Figur dargestellten Hammerpresse. Der Stempel 39 weist an seinem der Schraube 36 zugewandten in der Figur unteren Ende eine Reihe Vorsprünge 40 auf. Zu sehen ist eine Reihe Rippen 40, von denen zur besseren Übersicht nur eine Rippe 40 mit einem Bezugszeigen versehen ist.

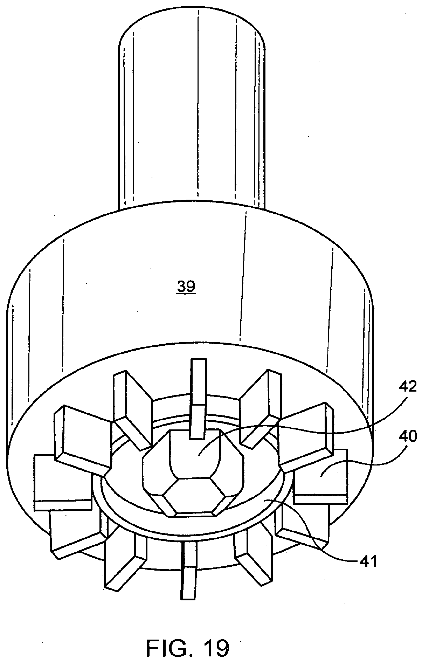

Fig. 19 zeigt in einer perspektivischen Darstellung die Unterseite des Stempels 39 ohne die Schraube 36. Es ist der Figur zu entnehmen, dass neben den Rippen 40 ein ringförmiger Vorsprung 41 und ein Vorsprung in Form eines Sechskantes 42 in einem zentralen Bereich des Stempels 39 vorgesehen ist. Auf diese Weise lässt sich in einem einzigen Arbeitsgang der Schraubenkopf 37 aus einem Draht herstellen. Ähnliches gilt für die Herstellung einer entsprechenden Schraubenmutter. Durch geeignete Gestaltung des Stempels 39 ist die Herstellung anderer Ausführungsformen der Schraubenmutter 1 oder des Schraubenkopfes 37 möglich.

Während die Erfindung illustriert und beschrieben wurde im Detail in den Zeichnungen und der vorangegangenen Beschreibung, ist es beabsichtigt, dass derartige Illustrationen und Beschreibungen lediglich illustrativ oder exemplarisch und nicht restriktiv sind, so dass die Erfindung nicht durch die offenbarten Ausführungsformen beschränkt ist. In den Ansprüchen schließt das Wort "aufweisend" nicht andere Elemente aus und der unbestimmte Artikel "ein" schließt eine Mehrzahl nicht aus. Alleinig der Umstand, dass bestimmte Merkmale in verschiedenen abhängigen Ansprüchen genannt sind, beschränkt nicht den Gegenstand der Erfindung. Auch Kombinationen dieser Merkmale können vorteilhaft eingesetzt werden. Die Bezugszeichen in den Ansprüchen sollen nicht den Umfang der Ansprüche beschränken.

### Bezugszeichenliste

- 1: Schraubenmutter
- 2: Körper
- 3: Grundfläche
- 4: Deckfläche
- 5: Ausnehmung
- 6: Mantelfläche
- 8: Bohrung
- 10: Innengewinde
- 11: Befestigungsanordnung
- 12: Bauteil
- 14: Oberfläche des Bauteils
- 16: Senkung
- 17: Senkungsfläche
- 18: Kontaktbereich
- 19: Bereich eines Klebeelements
- 20: Bereich der Mantelfläche
- 21: elastisch verformbarer Bereich
- 22: Schlitze
- 24: Zinken
- 26: Werkzeug
- 27: Körper
- 28: Vorsprung
- 29: Rippen
- 30: Schlitz
- 31: Sechskant
- 32: Hals
- 33: Nut
- 34: Dichtring
- 35: Bohrung
- 36: Schraube
- 37: Schraubenkopf
- 38: Außengewinde
- 39: Stempel
- 40: Rippen
- 41: Ring
- 42: Sechskant
- AK: Außenkante der Grundfläche
- MG: Mittelpunkt der Grundfläche
- ND: Nenndurchmesser
- GL: Gewindeaußenlinie
- F_{T}: Schraubenkraft
- F_{FR}: Reibungskraft
- L_{T}: Hebel Schraube
- L_{FR}: Hebel Reibung
- α: Winkel der Mantelfläche
- β: Winkel der Senkung

## Patentansprüche

1. Befestigungsanordnung (11) mit
- einer Schraubenmutter (1) oder einem Schraubenkopf, der eine Grundfläche (3), eine Deckfläche (4) und eine dazwischen verlaufende Mantelfläche (6) hat, und
- mit einer Senkung (16) in einer Oberfläche (14) eines zu befestigenden Bauteils (12), wobei die Form der Senkung (16) zu der Form des Körpers (2) der Schraubenmutter (1) oder des Schraubenkopfes korrespondiert,
wobei die Form der Senkung (16) zu der Form des Körpers (2) der Schraubenmutter (1) oder des Schraubenkopfes korrespondiert, wobei die Form der Senkung (16) derart zu der Form der Schraubenmutter (1) oder des Schraubenkopfes korrespondiert, dass ein Winkel (β), der in einem Längsschnitt durch eine Verlängerung der Fläche der Senkung (16) gebildet wird, kleiner ist als der Winkel (α) der Mantelfläche (6) der Schraubenmutter (1) oder des Schraubenkopfes, **dadurch gekennzeichnet, dass** die Mantelfläche (6) zumindest bereichsweise eine Oberflächenstruktur umfasst, die geeignet ist eine vorgegebene Reibung in Zusammenwirkung mit einer vorgegebenen Fläche des Bauteils (12) zu erreichen, die größer ist als eine Reibung bei glatter Oberfläche, wobei die Grundfläche (3) eine im Wesentlichen glatte Oberfläche aufweist.

2. Befestigungsanordnung nach Anspruch 1, wobei die Schraubenmutter (1) den Körper (2) umfasst, der durch die Grundfläche (3), die Deckfläche (4) sowie die dazwischen verlaufende Mantelfläche (6) gebildet ist, wobei ein Flächeninhalt der Grundfläche (3) größer ist als ein Flächeninhalt der Deckfläche (4), wobei die Mantelfläche (6) gebildet ist, wobei ein Flächeninhalt der Grundfläche (3) größer ist als ein Flächeninhalt der Deckfläche (4), wobei der Körper (2) eine Bohrung (8) umfasst, die von der Deckfläche (4) ausgehend zumindest teilweise zwischen Deckfläche (4) und Grundfläche (3) verläuft und ein Innengewinde (10) vorgegebener Größe aufweist.

3. Befestigungsanordnung nach Anspruch 1 oder 2, wobei der Körper (2) eine kegelstumpfförmige Kontur aufweist.

4. Befestigungsanordnung nach einem der vorhergehenden Ansprüche, bei dem die Oberflächenstruktur derart ausgebildet ist, dass die Mantelfläche (6) zumindest teilweise eine Verzahnung aufweist, die aus der Oberfläche der Mantelfläche (6) herausragt, und/oder bei dem die Oberflächenstruktur der Mantelfläche (6) als Beschichtung ausgebildet ist.

5. Befestigungsanordnung nach einem der vorhergehenden Ansprüche, bei dem die Oberflächenstruktur zumindest im Bereich (20) der Mantelfläche (6) angeordnet ist, die zu der Grundfläche (3) benachbart ist, und/oder bei der der Körper (2) in dem Bereich der Deckfläche (4) und/oder in dem zu der Deckfläche (4) benachbarten Bereich der Mantelfläche (6) zumindest teilweise einen Kleber oder ein Klebeelement aufweist.

6. Befestigungsanordnung nach einem der vorhergehenden Ansprüche zum Befestigen eines Bauteils (12) mit einem pyramidenstumpfförmigen Körper (2), der durch die Grundfläche (3), die Deckfläche (4) sowie die dazwischen verlaufende Mantelfläche (6) gebildet ist, wobei die Mantelfläche (6) zumindest drei Kanten aufweist und ein Flächeninhalt der Grundfläche (3) eine Bohrung (8) umfasst, die von der Deckfläche (4) ausgehend zumindest teilweise zwischen Deckfläche (4) und Grundfläche (3) verläuft und ein Innengewinde (10) vorgegebener Größe aufweist.

7. Befestigungsanordnung nach einem der vorhergehenden Ansprüche, wobei die Schraubenmutter (1) den Körper (2) umfasst, der durch die Grundfläche (3), die Deckfläche (4) sowie die dazwischen verlaufende Mantelfläche (6) gebildet ist,
wobei ein Flächeninhalt der Grundfläche (3) größer ist als ein Flächeninhalt der Deckfläche (4), wobei der Körper (2) eine Bohrung (8) umfasst, die von der Deckfläche (4) ausgehend zumindest teilweise zwischen Deckfläche (4) und Grundfläche (3) verläuft und ein Innengewinde (10) vorgegebener Größe aufweist, wobei der Grundfläche (3) in einem vorgegebenen radialen Abstand zu einem Mittelpunkt (MG) der Grundfläche (3) eine ringförmige Ausnehmung (5) zugeordnet ist, wobei die Ausnehmung (5) in einer Draufsicht auf die Grundfläche (3) parallel zu einer Außenkante (AK) der Grundfläche (3) verläuft.

8. Befestigungsanordnung nach Anspruch 7, bei der in einer Draufsicht eine dem Mittelpunkt (MG) der Grundfläche (3) zugewandte Innenkante der Ausnehmung (5) einen vorgegebenen radialen Abstand zu einer Gewindeaußenlinie (GL) aufweist, wobei die Gewindeaußenlinie (GL) dem Nenndurchmesser des Innengewindes (10) zugeordnet ist.

9. Befestigungsanordnung nach einem der vorhergehenden Ansprüche, bei der in einem Längsschnitt die Verlängerungen der Mantelfläche (6) einen Winkel (α) einschließen, der größer gleich 60° ist.

10. Befestigungsanordnung nach einem der vorhergehenden Ansprüche, bei der der Körper (2) mehrere Schlitze (22) aufweist, die jeweils zumindest in die Mantelfläche (6) und die Grundfläche (3) hineinragen, wobei die Schlitze (22) vorzugsweise derart voneinander beabstandet sind, so dass eine Federwirkung auf das Bauteil (12) während einer Befestigung der Schraubenmutter (1) im Bereich der Mantelfläche (6) resultiert, der zu der Grundfläche (3) benachbart ist.

11. Befestigungsanordnung nach Anspruch 10, bei der die mehreren Schlitze (22) in der Draufsicht auf die Grundfläche (3) bis zu einer dem Mittelpunkt (MG) der Grundfläche (3) abgewandten Außenkante der Ausnehmung (5) reichen, und/oder bei der die mehreren Schlitze (22) in einer Seitenansicht der Schraubenmutter (1) oder des Schraubenkopfes ausgehend von der Grundfläche (3) weiter in Richtung der Deckfläche (4) in den Körper (2) ragen als die Ausnehmung (5).

12. Befestigungsanordnung nach einem der Ansprüche 7 bis 11, bei der die Ausnehmung (5) in einem Querschnitt eine rechteckige, trapezförmige oder dreieckige Form aufweist, und/oder bei der die Grundfläche (3) der Schraubenmutter (1) oder des Schraubenkopfes bündig ist mit der Oberfläche (14) des Bauteils (12).

13. Befestigungsanordnung nach einem der vorhergehenden Ansprüche, bei der die Schraubenmutter (1) einen sich vom Körper (2) abgewandt an die Deckfläche (4) anschließenden Hals hat, wobei der Hals vorzugsweise zylinderförmig ist und insbesondere ein Innengewinde hat, das besonders bevorzugt mit der Bohrung (8) fluchtet.

14. Befestigungsanordnung nach Anspruch 13, **dadurch gekennzeichnet, dass** der Hals eine Nut aufweist, in der vorzugsweise ein Dichtring angeordnet ist.

15. Befestigungsanordnung nach einem der vorhergehenden Ansprüche, **dadurch gekennzeichnet, dass** Grundfläche (3) eine Werkzeugaufnahme hat, vorzugsweise eine Rändelung, einen Schlitz, einen Inbus, einen Sechskant oder eine Anordnung von mindestens 2 insbesondere zylinderförmigen Vertiefungen, besonders bevorzugt Bohrungen.

16. Befestigungsanordnung nach einem der vorhergehenden Ansprüche, **dadurch gekennzeichnet, dass** die Schraubenmutter (1) ein Blechpressteil oder ein Blechstanzteil ist, das vorzugsweise ein Vollgewinde, ein Halbgewinde oder ein Ein-Gewinde hat und/oder insbesondere eine Prägung im Stanzwerkzeug zur Aufrauhung der Mantelfläche erhalten hat.

17. Verfahren zum Herstellen einer Schraubenmutter (1) oder eines Schraubenkopfes für eine Befestigungsanordnung nach einem der vorhergehenden Ansprüche, bei dem eine ringförmige Ausnehmung (5) in die Grundfläche (3) des Körpers (2) der Schraubenmutter (1) derart gebohrt, gestanzt, gepresst, gesägt oder gefräst wird, dass diese in einer Draufsicht auf die Grundfläche (3) parallel zu einer Außenkante der Grundfläche (3) verläuft.

18. Verfahren nach Anspruch 17, bei dem mehrere Schlitze (22) in den Körper (2) derart gesägt, gepresst oder gefräst werden, dass der jeweilige Schlitz (22) in die Grundfläche (3) und Mantelfläche (6) hineinragt.

## Claims

1. Fastening arrangement (11) with
- a screw nut (1) or a screw head having a base surface (3), a cover surface (4), and a peripheral surface (6) extending between them, and
- a countersink (16) in a surface (14) of a component (12) to be fastened, wherein the shape of the countersink (16) corresponds to the shape of the body (2) of the screw nut (1) or the screw head,
wherein the shape of the countersink (16) corresponds to the shape of the body (2) of the screw nut (1) or the screw head, wherein the shape of the countersink (16) corresponds to the shape of the screw nut (1) or the screw head in such a way that an angle (β) formed in a longitudinal section through an extension of the surface of the countersink (16) is smaller than the angle (α) of the peripheral surface (6) of the screw nut (1) or the screw head, **characterized in that** the peripheral surface (6) comprises, at least in some areas, a surface structure that is suitable for achieving a defined friction in cooperation with a defined surface of the component (12) that is greater than the friction with a smooth surface, wherein the base surface (3) has a substantially smooth surface.

2. Fastening arrangement according to claim 1, wherein the screw nut (1) comprises the body (2), which is formed by the base surface (3), the cover surface (4) and the peripheral surface (6) extending between them, wherein an area of the base surface (3) is greater than an area of the cover surface (4), wherein the peripheral surface (6) is formed, wherein an area of the base surface (3) is greater than an area of the cover surface (4), wherein the body (2) comprises a bore (8) extending from the cover surface (4) at least partially between the cover surface (4) and the base surface (3) and has an internal thread (10) of a defined size.

3. Fastening arrangement according to claim 1 or 2, wherein the body (2) has a truncated conical contour.

4. Fastening arrangement according to any one of the preceding claims, wherein the surface structure is so firmed that the peripheral surface (6) has at least partially a toothing that protrudes from the surface of the peripheral surface (6), and/or wherein the surface structure of the peripheral surface (6) is formed as a coating.

5. Fastening arrangement according to any one of the preceding claims, wherein the surface structure is arranged at least in the region (20) of the peripheral surface (6) adjacent to the base surface (3), and/or in which the body (2) in the region of the cover surface (4) and/or in the region of the peripheral surface (6) adjacent to the cover surface (4) has at least partially an adhesive or an adhesive element.

6. Fastening arrangement according to any one of the preceding claims for fastening a component (12) with a truncated pyramidal body (2) formed by the base surface (3), the cover surface (4) and the peripheral surface (6) extending between them, wherein the peripheral surface (6) has at least three edges and an area of the base surface (3) comprises a bore (8) which extends from the cover surface (4) at least partially between the cover surface (4) and base surface (3) and has an internal thread (10) of a defined size.

7. Fastening arrangement according to any one of the preceding claims, wherein the screw nut (1) comprises the body (2) formed by the base surface (3), the cover surface (4) and the peripheral surface (6) extending between them, wherein an area of the base surface (3) is greater than an area of the cover surface (4), wherein the body (2) comprises a bore (8) which extends from the cover surface (4) at least partially between the cover surface (4) and the base surface (3) and has an internal thread (10) of a defined size, wherein the base surface (3) is provided with an annular recess (5) at a defined radial distance from a center point (MG) of the base surface (3), wherein the recess (5) extends parallel to an outer edge (AK) of the base surface (3) in a plan view of the base surface (3).

8. Fastening arrangement according to claim 7, wherein, in a plan view, an inner edge of the recess (5) facing the center point (MG) of the base surface (3) has a defined radial distance from a thread outer line (GL), wherein the thread outer line (GL) is associated with the nominal diameter of the internal thread (10).

9. Fastening arrangement according to any one of the preceding claims, wherein, in a longitudinal section, the extensions of the peripheral surface (6) enclose an angle (α) that is greater than or equal to 60°.

10. Fastening arrangement according to any one of the preceding claims, wherein the body (2) has a plurality of slots (22) which each extend at least into the peripheral surface (6) and the base surface (3), the slots (22) preferably being spaced apart from one another such that a spring effect results on the component (12) during fastening of the screw nut (1) in the area of the peripheral surface (6) adjacent to the base surface (3).

11. Fastening arrangement according to claim 10, wherein the plurality of slots (22) extend, in a plan view of the base surface (3), to an outer edge of the recess (5) facing away from the center point (MG) of the base surface (3), and/or in which the plurality of slots (22) extend, in a side view of the screw nut (1) or the screw head, starting from the base surface (3), extend further into the body (2) in the direction of the cover surface (4) than the recess (5).

12. Fastening arrangement according to any one of claims 7 to 11, wherein the recess (5) has a rectangular, trapezoidal, or triangular cross-section, and/or wherein the base surface (3) of the screw nut (1) or the screw head is flush with the surface (14) of the component (12).

13. Fastening arrangement according to any one of the preceding claims, wherein the screw nut (1) has a neck extending away from the body (2) and adjoining the cover surface (4), wherein the neck is preferably cylindrical and in particular has an internal thread, which is particularly preferably aligned with the bore (8).

14. Fastening arrangement according to claim 13, **characterized in that** the neck has a groove in which a sealing ring is preferably arranged.

15. Fastening arrangement according to any one of the preceding claims, **characterized in that** the base surface (3) has a tool holder, preferably a knurling, a slot, an Allen key socket, a hexagon socket or an arrangement of at least two, in particular cylindrical, recesses, particularly preferably bores.

16. Fastening arrangement according to any one of the preceding claims, **characterized in that** the screw nut (1) is a pressed sheet metal part or a stamped sheet metal part, which preferably has a full thread, a half thread, or a single thread and/or, in particular, has been embossed in the stamping tool to roughen the outer surface.

17. Method for manufacturing a screw nut (1) or a screw head for a fastening arrangement according to any one of the preceding claims, wherein an annular recess (5) is drilled, punched, pressed, sawed or milled into the base surface (3) of the body (2) of the screw nut (1) in such a way that, in a plan view of the base surface (3), it runs parallel to an outer edge of the base surface (3).

18. Method according to claim 17, wherein several slots (22) are sawed, pressed, or milled into the body (2) such that the respective slot (22) protrudes into the base surface (3) and the peripheral surface (6).

## Revendications

1. Dispositif de fixation (11) comprenant
- un écrou (1) ou une tête de vis présentant une surface de base (3), une surface de recouvrement (4) et une surface latérale (6) s'étendant entre celles-ci, et
- comprenant un abaissement (16) au sein d'une surface (14) d'un composant (12) à fixer, dans lequel la forme de l'abaissement (16) correspond à la forme du corps (2) de l'écrou (1) ou de la tête de vis,
dans lequel la forme de l'abaissement (16) correspond à la forme du corps (2) de l'écrou (1) ou de la tête de vis, dans lequel la forme de l'abaissement (16) correspond à la forme de l'écrou (1) ou de la tête de vis de telle manière qu'un angle (β) formé dans une section longitudinale par un prolongement de la surface de l'abaissement (16) est inférieur à l'angle (α) de la surface latérale (6) de l'écrou (1) ou de la tête de vis, **caractérisé en ce que** la surface latérale (6) comprend au moins localement une structure de surface appropriée pour obtenir, en coopération avec une surface prédéfinie du composant (12), une friction prédéfinie qui est supérieure à la friction sur une surface lisse, dans lequel la surface de base (3) présente une surface essentiellement lisse.

2. Dispositif de fixation selon la revendication 1, dans lequel l'écrou (1) comprend le corps (2) qui est formé par la surface de base (3), la surface de recouvrement (4) ainsi que par la surface latérale (6) s'étendant entre celles-ci, dans lequel une superficie de la surface de base (3) est supérieure à une superficie de la surface de recouvrement (4), dans lequel la surface latérale (6) est formée, dans lequel une superficie de la surface de base (3) est supérieure à une superficie de la surface de recouvrement (4), dans lequel le corps (2) comprend un alésage (8) qui s'étend au moins localement entre la surface de recouvrement (4) et la surface de base (3) à partir de la surface de recouvrement (4) et présente un filetage intérieur (10) de taille prédéfinie.

3. Dispositif de fixation selon la revendication 1 ou 2, dans lequel le corps (2) présente un contour tronconique.

4. Dispositif de fixation selon l'une quelconque des revendications précédentes, dans lequel la structure de surface est réalisée de telle manière que la surface latérale (6) présente au moins partiellement une denture qui dépasse de la surface de la surface latérale (6) et/ou dans lequel la structure de surface de la surface latérale (6) est réalisée sous la forme d'un revêtement.

5. Dispositif de fixation selon l'une quelconque des revendications précédentes, dans lequel la structure de surface est agencée au moins dans la région (20) de la surface latérale (6) qui est adjacente à la surface de base (3), et/ou dans lequel le corps (2) présente au moins partiellement un adhésif ou un élément adhésif dans la région de la surface de recouvrement (4) et/ou dans la région de la surface latérale (6) qui est adjacente à la surface de recouvrement (4).

6. Dispositif de fixation selon l'une quelconque des revendications précédentes, permettant de fixer un composant (12) avec un corps (2) en forme de tronc de pyramide qui est formé par la surface de base (3), la surface de recouvrement (4) ainsi que par la surface latérale (6) s'étendant entre celles-ci, dans lequel la surface latérale (6) présente au moins trois bords et une superficie de la surface de base (3) comprend un alésage (8) qui s'étend au moins partiellement entre la surface de recouvrement (4) et la surface de base (3) à partir de la surface de recouvrement (4) et présente un filetage intérieur (10) de taille prédéfinie.

7. Dispositif de fixation selon l'une quelconque des revendications précédentes, dans lequel l'écrou (1) comprend le corps (2) qui est formé par la surface de base (3), la surface de recouvrement (4) ainsi que par la surface latérale (6) s'étendant entre celles-ci, dans lequel une superficie de la surface de base (3) est supérieure à une superficie de la surface de recouvrement (4), dans lequel le corps (2) comprend un alésage (8) qui s'étend au moins partiellement entre la surface de recouvrement (4) et la surface de base (3) à partir de la surface de recouvrement (4) et qui présente un filetage intérieur (10) de taille prédéfinie, dans lequel un évidement annulaire (5) est associé à la surface de base (3) à une distance radiale prédéfinie d'un centre (MG) de la surface de base (3), dans lequel l'évidement (5), lorsqu'on considère la surface de base (3) en vue de dessus, s'étend parallèlement à un bord extérieur (AK) de la surface de base (3).

8. Dispositif de fixation selon la revendication 7, dans lequel un bord intérieur de l'évidement (5) tourné vers le centre (MG) de la surface de base (3) présente, lorsqu'on le considère en vue de dessus, une distance radiale prédéfinie par rapport à une ligne extérieure de filetage (GL), dans lequel la ligne extérieure de filetage (GL) est associée au diamètre nominal du filetage intérieur (10).

9. Dispositif de fixation selon l'une quelconque des revendications précédentes, dans lequel, selon une section longitudinale, les prolongements de la surface latérale (6) forment un angle (α) supérieur ou égal à 60°.

10. Dispositif de fixation selon l'une quelconque des revendications précédentes, dans lequel le corps (2) présente plusieurs fentes (22) qui pénètrent respectivement au moins dans la surface latérale (6) et la surface de base (3), dans lequel les fentes (22) sont de préférence espacées les unes des autres de sorte qu'un effet de ressort sur le composant (12) en résulte lors de la fixation de l'écrou (1) dans la région de la surface latérale (6) qui est adjacente à la surface de base (3).

11. Dispositif de fixation selon la revendication 10, dans lequel, lorsqu'on considère la surface de base (3) en vue de dessus, les plusieurs fentes (22) s'étendent jusqu'à un bord extérieur de l'évidement (5) opposé au centre (MG) de la surface de base (3), et/ou dans lequel, lorsqu'on considère l'écrou (1) ou la tête de vis en vue latérale, les plusieurs fentes (22) pénètrent dans le corps (2) plus loin en direction de la surface de recouvrement (4) à partir de la surface de base (3) que ne pénètre l'évidement (5).

12. Dispositif de fixation selon l'une quelconque des revendications 7 à 11, dans lequel l'évidement (5) présente une forme rectangulaire, trapézoïdale ou triangulaire dans une section transversale, et/ou dans lequel la surface de base (3) de l'écrou (1) ou de la tête de vis est en alignement avec la surface (14) du composant (12).

13. Dispositif de fixation selon l'une quelconque des revendications précédentes, dans lequel l'écrou (1) présente un col qui se raccorde à la surface de recouvrement (4) à l'opposé du corps (2), dans lequel le col est de préférence cylindrique et présente en particulier un filetage intérieur qui particulièrement de préférence aligné avec l'alésage (8).

14. Dispositif de fixation selon la revendication 13, **caractérisé en ce que** le col présente une rainure au sein de laquelle est agencée de préférence une bague d'étanchéité.

15. Dispositif de fixation selon l'une quelconque des revendications précédentes, **caractérisé en ce que** la surface de base (3) présente un logement d'outil, de préférence un moletage, une fente, une cavité pour clé Allen, une cavité pour clé à six pans ou un agencement d'au moins 2 cavités, particulièrement de préférence des alésages, en particulier cylindriques.

16. Dispositif de fixation selon l'une quelconque des revendications précédentes, **caractérisé en ce que** l'écrou (1) est une pièce pressée en tôle ou une pièce estampée en tôle qui présente de préférence un filetage complet, un demi-filetage ou un filetage unitaire et/ou a en particulier reçu un estampage dans l'outil d'estampage afin de rendre rugueuse la surface latérale.

17. Procédé de fabrication d'un écrou (1) ou d'une tête de vis pour un dispositif de fixation selon l'une quelconque des revendications précédentes, dans lequel un évidement annulaire (5) est percé, estampé, pressé, scié ou fraisé dans la surface de base (3) du corps (2) de l'écrou (1) de telle manière qu'il s'étend parallèlement à un bord extérieur de la surface de base (3) lorsqu'on considère la surface de base (3) en vue de dessus.

18. Procédé selon la revendication 17, dans lequel plusieurs fentes (22) sont sciées, pressées ou fraisées dans le corps (2) de telle manière que la fente (22) respective pénètre dans la surface de base (3) et dans la surface latérale (6).
